# EUROPEAN PATENT SPECIFICATION

(11) **EP 4 004 130 B1**
(45) Date of publication and mention of the grant of the patent: **14.06.2023**
(21) Application number: 20744041.3
(22) Date of filing: 24.07.2020
(51) Int. Cl.: C09D 11/101, C09D 11/03, B41M 3/14

(54) **RADIATION CURABLE INTAGLIO INKS**
STRAHLUNGSHÄRTBARE TIEFDRUCKFARBEN
ENCRES EN CREUX DURCISSABLES PAR RAYONNEMENT

(30) Priority: 30.07.2019 EP 19189054
(43) Date of publication of application: 01.06.2022
(73) Proprietor: SICPA HOLDING SA, 1008 Prilly (CH)
(72) Inventor: SPITTELER, Jean-Daniel, 1041 Poliez-le-Grand (CH); MAGNIN, Patrick, 74500 Publier (FR); BONNEFOI, Caroline, 74500 Publier (FR); ANNUNZIATA, Liana, 1004 Lausanne (CH); GOLLUT, Sébastien, 1022 Chavannes-Près-Renens (CH)
(74) Representative: Hoffmann Eitle
(86) International application number: PCT/EP2020/070951
(87) International publication number: WO 2021/018771

(56) References cited:
- EP-A1- 3 453 745
- WO-A1-2009/156400
- WO-A1-2014/131479

## Description

The present invention relates to the field of security documents and their protection against counterfeit and illegal reproduction. In particular the present invention relates to the field of intaglio printing processes for the printing of security documents.

### BACKGROUND OF THE INVENTION

With the constantly improving quality of color photocopies and printings and in an attempt to protect security documents against counterfeiting, falsifying or illegal reproduction, it has been the conventional practice to incorporate various security means in these documents. Such security documents can be banknotes, value documents or cards, transportation tickets or cards, tax banderols, and product labels that have no reproduceable effects. Typical examples of security means include security threads, windows, fibers, planchettes, foils, decals, holograms, watermarks, security inks comprising optically variable pigments, magnetic or magnetizable thin-film interference pigments, interference-coated particles, thermochromic pigments, photochromic pigments, luminescent, infrared-absorbing, ultraviolet-absorbing or magnetic compounds. In addition to those security features, security documents often carry a tactilely-detectable or feelable surface profile pattern which may be generated by means of printing.

Intaglio printing is used in the field of security documents, in particular banknotes, and delivers the most consistent and high quality printing of fine lines. Moreover, intaglio printing confers the well-known and recognizable relief features, in particular the unmistakable touch feeling, to a printed document.

The term "intaglio printing" as used in this application shall apply to the so-called "engraved steel die" or "copper plate" printing process which is well known to the skilled in the art. The following shall not apply to the also well-known rotogravure or gravure printing processes, which rely on a different type of inks, said gravure inks exhibiting very low viscosity values compared to intaglio inks.

During an intaglio printing processes, a rotating engraved steel cylinder or a printing cylinder carrying one or more plates engraved with a pattern or image to be printed is supplied with one or more inks, wherein said inks are applied to the engraved surface of the cylinder or the plates and the engravings. The printing plates or cylinders used herein are usually chromium plated, engraved nickel plates or cylinders, made by galvanic replication of an - often hand-engraved - original copper plate. During the printing process, not only does the ink fill the engravings of the cylinder/plates, it is also applied to the planar non-image surface of said cylinder/plates. It is thus essential that ink is thoroughly wiped off from the planar surface of the engraved cylinder/plates before the printing process on the substrate is carried out. This is commonly effected by a wiping cylinder contra-rotating to the engraved cylinder so that the two surfaces which touch are moving in opposite directions. Given the right conditions and, crucially, the right ink, this will remove the surplus ink from the planar surface, so that the only ink on the engraved cylinder/plates is in the engravings. This wiping process is unique to intaglio printing. The wiping cylinder, in turn, is continuously cleaned.

The inked intaglio plate is brought into contact with a substrate, e.g. a paper, a composite or a plastic material in sheet form or web form and the ink is transferred under pressure from the engravings of the intaglio printing plate onto the, forming a thick relief printing pattern on the substrate. The high pressure deforms the impression material, forcing the substrate to be printed into the engravings on the engraved cylinder. This results in the substrate picking up some ink and being embossed, corresponding to the engravings on the surface of the engraved cylinder.

As mentioned hereabove, the intaglio printing process involves wiping off any ink excess present on the surface of the intaglio printing plate/cylinder. The wiping off process may be carried out using a disposable fibrous material such as for example a paper or a tissue wiping system ("calico"), or a polymeric roll wiping system ("wiping cylinder"). Since the use of these fibrous materials results in massive quantities of ink-impregnated waste to dispose of, representing potential environmental hazards, and because of the printing speed on an industrial printing press, it is preferred that the ink excess is removed with the polymeric wiping cylinder and a cleaning/wiping solution to clean the polymeric wiping cylinder. Wiping off with paper or tissue is practically not used anymore on an industrial printing press.

The cylinderwipe method is mainly used in a large volume of printing and uses a cylinder coated with a material to which the ink adheres easily, for example polyvinyl chloride (PVC) to remove the ink excess from the engraved cylinder. The ink has then to be completely removed from the coated surface of the PVC wiping cylinder before that part of the surface returns to contact with the engraved cylinder. This is achieved by a combination of scraping, brushing and washing. Because of environmental concerns and regulation on volatile organic compounds, cleaning of the polymeric wiping cylinder with solvent is practically not used anymore. Wiping off using an aqueous solution as an emulsifying medium for the wiped-off excess ink is preferred, and suitable cleaning solutions are alkaline aqueous wiping solution comprising caustic soda and surfactant such as for example sulfated/sulfonated castor oil (SCO).

The intaglio ink has then to be cured or dried. Conventionally, this has been done either by the application of heat or, more commonly, by oxidative drying. Curing or drying of oxidatively drying inks is typically a slow process which results in a higher tendency of the oxidative inks, as compared to radiation curable inks, to produce set-off. Furthermore, it has the substantial disadvantage that it is a relatively slow process, and documents correspondingly printed and stacked as sheets cannot usually be handled for further processing before a drying time period of one to several days. The curing of printed inks by radiation, in particular UV-Vis radiation, is known and widely introduced in the art of printing. Radiation curing allows a rapid, almost instantaneous curing/drying of the printed ink film, and hence opens the way to increase production speed. Due to its fast or almost immediate curing, intaglio printing with radiation curable inks allows reducing the time between printing and handling of the printed substrates and allows increasing the number of stacked sheets per pile. The presence of volatile organic compounds can be avoided with radiation curable intaglio inks. Radiation curable intaglio inks are also significantly more stable on the printing press than oxidatively drying inks.

Intaglio printing inks for the printing of security documents with a polymeric wiping cylinder are known to be unique and very specific and must satisfy the following requirements: the stability of the ink before printing, on the inking rollers and until the moment of printing; the rheological properties at the moment of ink transfer to the intaglio cylinder and at the moment of printing; the ability of the ink to be easily and quantitatively removed from the non-printing areas of the plate (wipeability) and the ease of cleaning of the polymeric wiping cylinder with the alkaline aqueous wiping solutions (detergeability).

EP 1 751 240 A1 discloses energy-curable, in particular UV-Vis curable, intaglio printing inks comprising an acylphosphine oxide as photoinitiator. The disclosed intaglio printing inks comprises a binder comprising one or more oligomers such as epoxy acrylates, acrylated oils, urethane acrylates, polyester acrylates, silicone acrylates, acrylated amines, acrylic saturated resins and acrylic acrylates and/or reactive (meth)acrylate monomers such as polyester (meth)acrylates, polyol (meth)acrylates and polyether (meth)acrylates. The exemplified intaglio printing ink disclosed in Table 1 of EP 1 751 240 A1 comprises a bisphenol-A epoxy diacrylate oligomer and tripropylene glycol diacrylate. The exemplified intaglio printing ink disclosed in Table 3 of EP 1 751 240 A1 comprises a fatty acid polyester acrylate oligomer and an ethoxylated pentaerythritol tetraacrylate. The disclosed intaglio inks may suffer from poor or a lack of detergeability.

US 2007/0179211 discloses energy-curable, in particular UV-Vis curable, intaglio printing inks comprising a pigment, a same binder as disclosed in US 2007/0179211, a photoinitiator and a plasticizer, wherein said plasticizer is deemed to improve the wiping ability of said inks. The intaglio printing inks disclosed in the tables of US 2007/0179211 are similar to those disclosed in EP 1 751 240 A1 but comprise dibutyl sebacate, acetyl triethyl citrate, tall oil fatty acid, linseed oil, lauric acid, butyl stearate, oleic acid and hexyl tallate as wiping aids (plasticizers). The disclosed inks are said to exhibit an improved wiping capability judged by the cleanliness of the non-image area of the print and by a reduced amount of ink that was transferred to the paper.

EP 2 489 709 A1 discloses hybrid intaglio printing inks, i.e. inks having both UV curability and oxidation polymerizability. The disclosed hybrid intaglio printing inks comprise at least an UV curable composition, an oxidation polymerizable composition, a photopolymerization initiator, an oxidation polymerization catalyst and a pigment, wherein the UV curable composition comprises an acid-modified epoxy-acrylate. The disclosed hybrid intaglio printing inks are said to exhibit improved set-off properties, improved anti-chalking property and improved print quality. However, hybrid intaglio printing inks may suffer from a reduced pot life or shelf life upon storage with the formation of skin on the surface of said inks and may suffer from a poor stability on the intaglio printing press.

Therefore, a need remains for radiation curable intaglio inks satisfying stability upon storage and use, optimized rheology, good wipeability and good detergeability in standard alkaline aqueous wiping solutions.

### SUMMARY

Accordingly, it is an object of the present invention to overcome the deficiencies of the prior art as discussed above. In a first aspect, the present invention provides a radiation curable intaglio ink comprising:
a. from about 10 wt-% to about 60 wt-% of one or more radiation curable compounds, wherein at least one of said one or more radiation curable compounds is a fatty acid polyester (meth)acrylate oligomer, preferably a fatty acid polyester acrylate oligomer;
b. from about 2 wt-% to about 20 wt-% of one or more photoinitiators, preferably selected from the group consisting of Norrish Type I photoinitiators, Norrish Type II photoinitiators mixtures thereof;
c. from about 5 wt-% to about 12 wt-% of a high molecular weight acid modified alkyd surfactant and/or an alkylarene sulfonic acid surfactant;
d. from about 10 wt-% to about 55 wt-% of one or more fillers or extenders, preferably selected from the group consisting of carbon fibers, talcs, micas, wollastonites, calcinated clays, china clays, kaolins, carbonates, silicas and silicates, sulfates, titanates, titanium dioxides, alumina hydrates, silicas, fumed silicas, montmorillonites, graphites, anatases, rutiles, bentonites, vermiculites, zinc whites, zinc sulfides, wood flours, quartz flours, corn starches, natural fibers, synthetic fibers and combinations thereof, and

the weight percents being based on the total weight of the radiation curable intaglio ink,
wherein the radiation curable intaglio ink has a viscosity between about 10 and about 50 Pas at 40°C and 200 s⁻¹.

Also described and claimed therein are patterns or images made from the radiation curable intaglio ink described herein, wherein said patterns or images act as security features on the substrate onto which they are applied.

Also described and claimed therein are security documents comprising the pattern or image described herein.

Also described and claimed therein are processes for producing the patterns or images described herein, wherein said processes comprise:
a) inking an intaglio engraved printing plate with the radiation curable intaglio ink described herein,
b) wiping off any excess of the radiation curable intaglio ink using a polymeric wiping cylinder and cleaning said polymeric wiping cylinder with an alkaline aqueous wiping solution in combination with one or more mechanical means,
c) printing the pattern or image with the intaglio engraved printing plate by applying the radiation curable intaglio ink onto the substrate, and
d) curing the radiation curable intaglio ink by radiation.

### BRIEF DESCRIPTION OF DRAWINGS

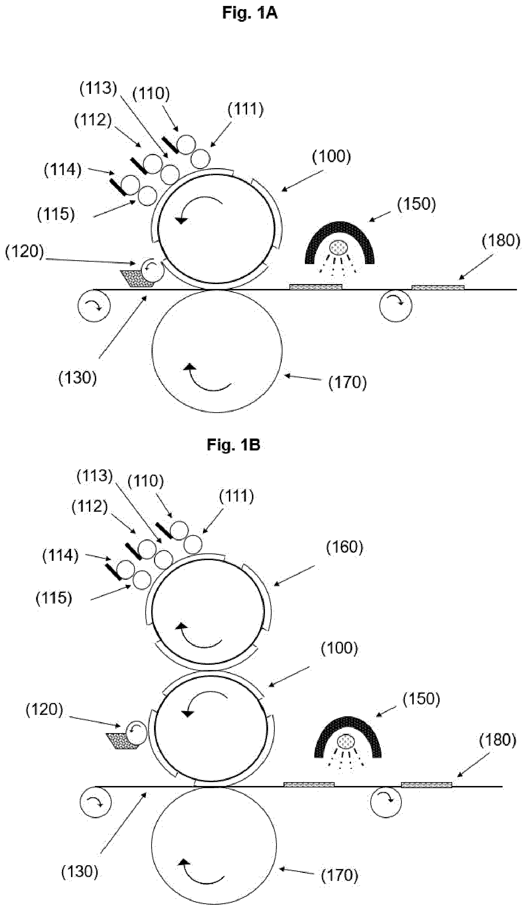

**Fig. 1A-B** show schematic representations of intaglio printing presses, wherein the printing press of Fig. 1A operates with a direct inking process and the printing press of Fig. 1B operates with an indirect inking process (Orlof process).

### DETAILED DESCRIPTION

The following definitions are to be used to interpret the meaning of the terms discussed in the description and recited in the claims.

As used herein, the article "a" indicates one as well as more than one and does not necessarily limit its referent noun to the singular.

As used herein, the terms "about" means that the amount or value in question may be the value designated or some other value about the same. The phrases are intended to convey that similar values within a range of ±5% of the indicated value promote equivalent results or effects according to the invention.

As used herein, the term "and/or" or "or/and" means that either all or only one of the elements of said group may be present. For example, "A and/or B" shall mean "only A, or only B, or both A and B".

As used herein, the term "at least" is meant to define one or more than one, for example one or two or three.

The term "security document" refers to a document which is usually protected against counterfeit or fraud by at least one security feature. Examples of security documents include without limitation value documents and value commercial goods.

The term "(meth)acrylate" refers to the acrylate as well as the corresponding methacrylate.

As used herein, the expression "wiping" refers to the removal of an intaglio ink from the non-printing areas of the engraved cylinder/plates of an intaglio press.

As used therein, the expression "detergeabiltiy" refers to the ability of an intaglio ink to be emulsified with an alkaline aqueous wiping solution and removed from the polymeric wiping cylinder after emulsification with said alkaline aqueous wiping solution with the use of one or more mechanical means.

The radiation curable intaglio inks described herein have a viscosity between about 10 Pa·s and 50 Pa.s, preferably between about 10 Pa·s and about 40 Pa·s, at 40°C and at a shear rate of 200 s⁻¹, wherein said viscosity values are obtained with a Haake Roto Visco 1 rotational rheometer (C20/0.5°; at 40°C and 200 sec⁻¹).

Radiation curable inks consist of inks that may be cured by radiation with light having a wavelength in the UV-Vis range (hereafter referred as UV-Vis curable) or by E-beam radiation (hereafter referred as EB). Radiation curable inks are known in the art and can be found in standard textbooks such as the series "Chemistry & Technology of UV & EB Formulation for Coatings, Inks & Paints", published in 7 volumes in 1997-1998 by John Wiley & Sons in association with SITA Technology Limited. Radiation curing, in particular UV-Vis curing, advantageously leads to very fast curing processes and hence drastically decreases the drying time of inks thus allowing a high production rate while preventing set-off and blocking issues. The radiation curable intaglio inks described herein are preferably UV-Vis curable intaglio inks

The radiation curable intaglio ink described herein comprises from about 10 wt-% to about 60 wt- %, preferably from about 15 wt-% to about 50 wt-%, of one or more radiation curable compounds, wherein at least one of said one or more radiation curable compounds is the fatty acid polyester (meth)acrylate oligomer described herein, preferably a fatty acid polyester acrylate oligomer, more preferably a fatty acid polyester monoacrylate oligomer, a fatty acid polyester diacrylate oligomer, a fatty acid polyester triacrylate oligomer, a fatty acid polyester tetraacrylate oligomer, a fatty acid polyester hexaacrylate oligomer or a mixture thereof, still more preferably a fatty acid polyester tetraacrylate oligomer and/or a fatty acid polyester hexaacrylate oligomer, the weight percents being based on the total weight of the radiation curable intaglio ink.

According to one embodiment, at least one of the one or more radiation curable compounds is the fatty acid polyester (meth)acrylate oligomer described herein, preferably the fatty acid polyester tetraacrylate oligomer described herein or the fatty acid polyester hexaacrylate oligomer described herein.

According to another embodiment, at least one of the one or more radiation curable compounds is the fatty acid polyester (meth)acrylate oligomer described herein, preferably the fatty acid polyester tetraacrylate oligomer described herein or the fatty acid polyester hexaacrylate oligomer described herein, and at least another is a (meth)acrylate monomer reactive diluent selected from the group consisting of mono(meth)acrylate monomers, di(meth)acrylate monomers, tri(meth)acrylate monomers, tetra(meth)acrylate monomers, penta(meth)acrylate monomers, hexa(meth)acrylate monomers and mixtures thereof, wherein the total amount of the fatty acid polyester (meth)acrylate oligomer described herein and of the (meth)acrylate monomer reactive diluent is from about 10 wt-% to about 60 wt-%, preferably from about 15 wt-% to about 50 wt-%, the weight percents being based on the total weight of the radiation curable intaglio ink. By "at least another being a (meth) acrylate monomer reactive diluent", it also refers to any combinations of two or more (meth)acrylate monomer reactive diluents independently selected from the group consisting of mono(meth)acrylate monomers, di(meth)acrylate monomers, tri(meth)acrylate monomers, tetra(meth)acrylate monomers, penta(meth)acrylate monomers and hexa(meth)acrylate monomers as described herein.

According to another embodiment, at least one of the one or more radiation curable compounds is the fatty acid polyester (meth)acrylate oligomer described herein, preferably the fatty acid polyester tetraacrylate oligomer described herein or the fatty acid polyester hexaacrylate oligomer described herein, and at least another is an urethane (meth)acrylate oligomer and/or an epoxy (meth)acrylate oligomer, wherein the total amount of the fatty acid polyester (meth)acrylate oligomer described herein and of the urethane (meth)acrylate oligomer and/or epoxy (meth)acrylate oligomer is from about 10 wt-% to about 60 wt-%, preferably from about 15 wt-% to about 50 wt-%, the weight percents being based on the total weight of the radiation curable intaglio ink.

According to another embodiment, at least one of the one or more radiation curable compounds is the fatty acid polyester (meth)acrylate oligomer described herein, preferably the fatty acid polyester tetraacrylate oligomer described herein or the fatty acid polyester hexaacrylate oligomer described herein, at least another is a (meth)acrylate monomer reactive diluent selected from the group consisting of mono(meth)acrylate monomers, di(meth)acrylate monomers, tri(meth)acrylate monomers, tetra(meth)acrylate monomers, penta(meth)acrylate monomers, hexa(meth)acrylate monomers and mixtures thereof and at least another is an urethane (meth)acrylate oligomer and/or an epoxy (meth)acrylate oligomer, wherein the total amount of the at least one of the one or more radiation curable compounds is the fatty acid polyester (meth)acrylate oligomer described herein, of the reactive (meth)acrylate monomer and of the urethane (meth)acrylate oligomer and/or epoxy (meth)acrylate oligomer is from about 10 wt-% to about 60 wt-%, preferably from about 15 wt-% to about 50 wt-%, the weight percents being based on the total weight of the radiation curable intaglio ink. By "at least another being a (meth)acrylate monomer reactive diluent", it also refers to any combination of two or more (meth)acrylate monomer reactive diluents independently selected from the group consisting of mono (meth)acrylate monomers, di(meth)acrylate monomers, tri(meth)acrylate monomers, tetra(meth)acrylate monomers, penta(meth)acrylate monomers, hexa(meth)acrylate monomers as described herein.

The fatty acid polyester (meth)acrylate oligomer described herein, preferably the fatty acid polyester tetraacrylate oligomer described herein or the fatty acid polyester hexaacrylate oligomer described herein, comprises fatty acid residues. Preferably, the fatty acid residues of the fatty acid polyester (meth)acrylate oligomer described herein, in particular of the fatty acid polyester tetraacrylate oligomer described herein or the fatty acid polyester hexaacrylate oligomer described herein, is a saturated fatty acid residue, more preferably a saturated fatty acid residue having 14 to 20 carbon atoms (i.e. myristic acid, palmitic acid, stearic acid and arachidic acid), still more preferably 16 to 18 carbon atoms i.e. (palmitic acid and stearic acid) According to a preferred embodiment, the radiation curable intaglio ink described herein comprises at least one of the one or more radiation curable compounds being the fatty acid polyester tetraacrylate oligomer described herein and/or the fatty acid polyester hexaacrylate oligomer, wherein the fatty acid residues are saturated fatty acids, more preferably saturated fatty acid residues having 14 to 20 carbon atoms (i.e. myristic acid, palmitic acid, stearic acid and arachidic acid), still more preferably 16 to 18 carbon atoms (i.e. palmitic acid and stearic acid). Particularly suitable fatty acid polyester tetraacrylate oligomers and fatty acid polyester hexaacrylate oligomer are sold by Allnex under the designation EBECRYL^{®} 657, EBECRYL^{®} 1657, EBECRYL^{®} 870, EBECRYL^{®} 1870 and EBECRYL^{®}450.

According to one embodiment, the radiation curable intaglio ink described herein comprises one or more radiation curable compounds, wherein one or more another compounds of the one or more radiation curable compounds described herein are (meth)acrylate monomer reactive diluents. Reactive diluents are used to reduce the viscosity of the ink. The one or more reactive diluents are selected from the group consisting of mono(meth)acrylates, di(meth)acrylates, tri(meth)acrylates, tetra(meth)acrylates, penta(meth)acrylates, hexa(meth)acrylates and mixtures thereof, more preferably selected from the group consisting of tri(meth)acrylates, tetra(meth)acrylates and mixtures thereof. According to one embodiment, the one or more reactive diluents are selected from the group consisting of monoacrylates, diacrylates, triacrylates, tetraacrylates, pentaacrylates, hexaacrylates and mixtures thereof, more preferably selected from the group consisting oftriacrylates, tetraacrylatesand mixtures thereof.

Examples of di(meth)acrylate compounds include without limitation of 1,3-butylene glycol diacrylate, 1,3-butylene glycol dimethacrylate, 1,4-butanediol diacrylate, 1,4-butanediol dimethacrylate, 1,6-hexanediol diacrylate, 1,6-hexanediol dimethacrylate, alkoxylated diacrylate, alkoxylated dimethacrylate, esterdiol diacrylate, ethoxylated bisphenol A diacrylate, ethoxylated bisphenol A dimethacrylate, ethylene glycol diacrylate, ethylene glycol dimethacrylate, diethylene glycol diacrylate, triethylene glycol diacrylate, triethylene glycol dimethacrylate, tetraethylene glycol diacrylate, tetraethylene glycol dimethacrylate, dipropyleneglycol diacrylate, dipropyleneglycol dimethacrylate, tripropylene glycol diacrylate, tripropylene glycol dimethacrylate, polyethylene glycol diacrylate (e.g. PEG 200, 300, 400, 600 and diacrylates), polyethylene glycol dimethacrylate (e.g. PEG 200, 400, 600 and 800 dimethacrylate), 1,9-nonanediol diacrylate, neopentyl glycol diacrylate, alkoxylated neopentyl glycol diacrylate (e.g. propoxylated neopentyl glycol diacrylate), neopentyl glycol dimethacrylate, tricyclodecane dimethanol diacrylate, tricyclodecane dimethanol dimethacrylate, alkoxylated bisphenol A diacrylate (e.g. ethoxylated bisphenol A diacrylate and propoxylated bisphenol A diacrylate), alkoxylated bisphenol A dimethacrylate (e.g. ethoxylated bisphenol A dimethacrylate), and mixtures thereof.

Examples of tri(meth)acrylates include without limitation trimethylolpropane triacrylate, trimethylolpropane trimethacrylate, alkoxylated trimethylolpropane triacrylate (e.g. ethoxylated trimethylolpropane triacrylate and propoxylated trimethylolpropane triacrylate), alkoxylated trimethylolpropane trimethacrylate (e.g. ethoxylated trimethylolpropane trimethacrylate and propoxylated trimethylolpropane trimethacrylate), alkoxylated glycerol triacrylate (e.g. ethoxylated glycerol triacrylate and propoxylated glycerol triacrylate), pentaerythritol triacrylate, alkoxylated pentaerythritol triacrylate (e.g. ethoxylated pentaerythritol triacrylate, propoxylated pentaerythritol triacrylate), and mixtures thereof.

Examples of tetra(meth)acrylates include without limitation ditrimethylolpropane tetraacrylate, pentaerythritol tetraacrylate, alkoxylated pentaerythritol tetraacrylate (e.g. ethoxylated pentaerythritol tetraacrylate and propoxylated pentaerythritol tetraacrylate) and mixtures thereof.

Examples of penta(meth)acrylates include without limitation dipentaerythritol pentaacrylate,

Examples of hexa(meth)acrylates include without limitation dipentaerythritol hexaacrylate, and ethoxylated sorbitol hexaacrylate.

According to one embodiment, the radiation curable intaglio ink described herein comprises one or more radiation curable compounds, wherein one or more another compounds of the one or more radiation curable compounds described herein are urethane (meth)acrylate oligomers and/or an epoxy (meth)acrylate oligomers. Suitable examples of urethane (meth)acrylate oligomers include without limitation aliphatic urethane (meth)acrylate oligomers, in particular diacrylates, triacrylates, tetraacrylates and hexaacrylates and aromatic (meth)acrylate oligomers, in particular diacrylates, triacrylates, tetraacrylates and hexaacrylates, The urethane (meth)acrylate oligomers may be based upon polyethers or polyesters, which are reacted with aromatic, aliphatic, or cycloaliphatic diisocyanates and capped with hydroxy acrylates. Particularly suitable aliphatic urethane (meth)acrylate oligomers are sold by Rahn under the designation Genomer* 4316

Suitable examples of epoxy (meth)acrylate oligomers include without limitation aliphatic epoxy (meth)acrylate oligomers, in particular monoacrylates, diacrylates and triacrylates, and aromatic epoxy (meth)acrylate oligomers, in particular bisphenol-A epoxy (meth)acrylate oligomers such as the product sold by Allnex under the designation EBECRYL^{®} 1606 EBECRYL^{®} 3608.

As mentioned above, radiation curing of compounds requires the presence of one or more photoinitiators. As mentioned herein and as known by those skilled in the art, the radiation curable, in particular the UV-Vis curable, intaglio ink described herein to be cured and hardened on a substrate such as those described herein comprises one or more photoinitiators, said one or more photoinitiators being selected according to its/their absorption spectrum/spectra in correlation with the emission spectrum of the radiation source. Depending on the degree of transmission of the electromagnetic radiation through the substrate, hardening of the intaglio ink may be obtained by increasing the irradiation time. However, depending on the substrate material, the irradiation time is limited by the substrate material and its sensitivity to the heat that might be produced by the radiation source.

The one or more photoinitiators described herein are preferably selected from the group consisting of Norrish Type I photoinitiators, Norrish Type II photoinitiators and mixtures thereof. Norrish Type I photoinitiators are preferably selected from the group consisting of aminoketones (e.g. alpha-aminoketones), hydroxyketones (e.g. alpha-hydroxyketones), alkoxyketones (e.g. alpha-alkoxyketones), acetophenones, , ketosulfones, benzyl ketals, benzoin ethers, benzoylformate esters, phosphine oxides, phenylglyoxylates, and mixtures thereof and preferably selected from the group consisting of phosphine oxides, alpha-hydroxyketones and mixtures thereof. Norrish Type II photoinitiators are preferably selected from the group consisting of combinations of amines, alcohols, ethers, esters or thiols with aromatic ketones, preferably combinations of amines and aromatic ketones, preferably tertiary amines and aromatic ketones. The one or more photoinitiators described herein may be low molecular weight photoinitiators, macromolecular photoinitiators and/ or polymeric photoinitiators. The one or more photoinitiators described herein may be polyfunctional photoinitiators. The one or more photoinitiators described herein may be co-polymerizable photoinitiators, i.e. photoinitiators carrying one or more groups (e.g. acrylate groups) capable of co-reacting during the radiation curing reaction.

It may also be advantageous to include a sensitizer in conjunction with the one or more photoinitiators in order to achieve efficient curing. Typical examples of suitable photosensitizers include without limitation 2-methyl thioxanthone; 2,4-dimethylthioxanthone; 2,4-diethylthioxanthone; 2-isopropylthioxanthone (ITX) ; 1-chloro-2-propoxy-thioxanthone (CPTX) ; 1-chloro-4-propoxythioxanthone, 2-chloro-thioxanthone (CTX) and 2,4-diethyl-thioxanthone (DETX); and polymeric thioxanthone derivatives and mixtures of two or more thereof.

Suitable examples of alpha-hydroxyketones include without limitation (1-[4-(2-hydroxyethoxy)-phenyl]-2-hydroxy-2-methyl-1-propan-1-one); 1-hydroxycyclohexyl phenyl ketone; 2-hydroxy-2-methyl-1-phenylpropan-1-one; 2-Hydroxy-2-methyl-1-(4-tert-butyl)phenylpropan-1-one; 2-hydroxy-1-[4-[[4-(2-hydroxy-2-methylpropanoyl)phenyl]methyl]phenyl]-2-methylpropan-1-one; 2-hydroxy-1-[4-[4-(2-hydroxy-2-methylpropanoyl)phenoxy]phenyl]-2-methylpropan-1-one; and oligo[2-hydroxy-2-methyl-1-[4-(1-methylvinyl)phenyl]propanone].

Suitable examples of alpha-amino ketones include those containing a benzoyl moiety, otherwise called alpha-amino acetophenones, for example 2-methyl-1-[4-(methylthio)phenyl]-2-morpholinopropan-1-one; 2-benzyl-2-dimethylamino-1-(4-morpholino-phenyl)-butan-1-one; and 2-dimethylamino-2-(4-methylbenzyl)-1-(4-morpholin-4-yl-phenyl)-butan-1-one.

Suitable examples of acetophenones include without limitation 2,2-diethoxyacetophenone; 2-ethylhexyl-4-dimethylaminobenzoate; and 2-methoxy-2-phenylacetophenone.

A suitable example of ketosulfone include without limitation 1-[4-(4-benzoylphenylsulfanyl)phenyl]-2-methyl-2-(4-methylphenylsulfonyl)propan-1-one.

A suitable example of benzyl ketals includes without limitation 2,2-dimethoxy-2-phenylacetophenone.

Suitable examples of benzoin ethers include without limitation benzoinmethyl ether; benzoinisopropyl ether; 2-ethoxy-1,2-diphenylethanone; 2-isopropoxy-1,2-diphenylethanone; 2-isobutoxy-1,2-diphenylethanone; 2-butoxy-1,2-diphenylethanone; 2,2-dimethoxy-1,2-diphenylethanone; and 2,2-diethoxyacetophenone.

Suitable examples of phosphine oxides include without limitation 2,4,6-trimethylbenzoyldiphenylphosphine oxide; ethyl (2,4,6-trimethylbenzoyl)phenylphosphinate; phenylbis(2,4,6-trimethylbenzoyl)phosphine oxide; bis(2,6-dimethoxybenzoyl)-2,4,4-trimethylpentylphosphine oxide; substituted acyl-phosphine oxides sold as Speedcure XKm from Lambson; a mixture of diphenyl(2,4,6-trimethylbenzoyl)phosphine oxide and phenylbis(2,4,6-trimethylbenzoyl)phosphine oxide; a mixture of diphenyl(2,4,6-trimethylbenzoyl)phosphine oxide and 2-hydroxy-2-methylpropiophenone, a mixture of phenylbis(2,4,6-trimethylbenzoyl)phosphine oxide and 2-hydroxy-2-methylpropiophenone; and a mixture of ethyl(2,4,6-trimethylbenzoyl)phenylphosphinate and 2-hydroxy-2-methylpropiophenone.

Suitable examples of phenylglyoxylates include without limitation methyl benzoylformate; 2-[2-oxo-2-phenyl-acetoxy-ethoxy]ethyl 2-oxo-2-phenylacetate; and a mixture of 2-[2-oxo-2-phenyl-acetoxy-ethoxy]ethyl 2-oxo-2-phenylacetate and oxy-phenyl-acetic acid 2-[2-hydroxy-ethoxy]-ethyl ester.

Suitable examples of aromatic ketones include without limitation benzophenone; 2-methylbenzophenone; 3-methylbenzophenone; 4-methyl benzophenone; 2,4,6-trimethyl benzophenone; mixture of 4-methyl benzophenone and 2,4,6-trimethyl benzophenone; 3,3'-dimethyl-4-methoxybenzophenone; 2-hydroxybenzophenone; 3-hydroxybenzophenone; 4-hydroxybenzophenone; 4-chlorobenzophenone; 4,4'-dichlorobenzophenone methyl ortho benzoylbenzoate; 4-phenyl benzophenone; 4-(4-methylphenylthio)-benzophenone; 4,4'-bis(dimethylamino)-benzophenone (Michler's ketone); 4,4'-bis(diethylamino)-benzophenone; 4,4'-bis(ethylmethylamino)-benzophenone; 4,4'-diphenoxy-benzophenone; 4,4'-bis(4-isopropyl-phenoxy)-benzophenone;2-methyl thioxanthone; 2,4-dimethylthioxanthone; 2,4-diethylthioxanthone; 2-isopropylthioxanthone (ITX); 1-chloro-2-propoxy-thioxanthone (CPTX); 1-chloro-4-propoxythioxanthone; 2-chloro-thioxanthone (CTX) and 2,4-diethyl-thioxanthone (DETX); polymeric thioxanthones; xanthone; 2-benzoyl-xanthone; anthraquinone; 2-ethylanthraquinone; 9,10-phenanthrenequinone; methyl benzoyl formate; ethyl benzoyl formate; camphorquinone; dibenzosuberenone.

Suitable examples of amines include without limitation methyldiethanolamine; triethanolamine; ethyl-4-dimethylaminobenzoate; acrylated tertiary amines (e.g. 2-(dimethylamino) ethyl methacrylate); 2-dimethylaminoethyl methacrylate; mono-alkyl, di-alkyl or tri-alkyl tertiary amine derivatives; and polymeric mono-alkyl, di-alkyl or tri-alkyl tertiary amine derivatives.

Other examples of useful photoinitiators can be found in standard textbooks such as "Chemistry & Technology of UV & EB Formulation for Coatings, Inks & Paints", Volume III, "Photoinitiators for Free Radical Cationic and Anionic Polymerization", 2nd edition, by J. V. Crivello & K. Dietliker, edited by G. Bradley and published in 1998 by John Wiley & Sons in association with SITA Technology Limited.

The one or more photoinitiators described herein are preferably present in the radiation curable intaglio ink described herein in an amount from about 2 wt-% to about 20 wt-%, more preferably in an amount from about 5 wt-% to about 15 wt-%, the weight percents being based on the total weight of the radiation curable intaglio ink.

The radiation curable intaglio ink described herein comprises from about 5 wt-% to about 12 wt-%, preferably from about 5.5 wt-% to about 10 wt-%, of either the high molecular weight acid modified alkyd surfactant described herein and/or the alkylarene sulfonic acid surfactant described herein, the weight percents being based on the total weight of the radiation curable intaglio ink.

According to one embodiment, the radiation curable intaglio ink described herein comprises from about 5 wt-% to about 12 wt-%, preferably from about 5.5 wt-% to about 10 wt-%, of the high molecular weight acid modified alkyd surfactant having preferably a molecular weight from about 3000, the weight percents being based on the total weight of the radiation curable intaglio ink. The high molecular weight acid modified alkyd surfactant has preferably a molecular weight from about 3000 described herein to about 20000, preferably from about 5000 to about 15000. The molecular weight of the high molecular weight acid modified alkyd surfactant is measured by GPC (gel permeation chromatography) using an Agilent GPC50+, wherein said device is equipped with an isocratic pump, a degasser, an autosampler and a triple detector comprising a differential refractometer, a viscosimeter and a double-angle light scattering detector (15° and 90°). A calibration curve (log(molecular mass) = f(retention volume)) is established using twelve polymethyl methacrylate (PMMA) standards (with molecular masses ranging from 650 to 2'299'000 g/mol). One guard-column (column length 50 mm, internal diameter 7.5 mm) and three columns Polargel M, M and L (column length 300 mm, internal diameter 7.5 mm; stationary phase: hydrophobic and hydrophilic copolymers with a particle size of 8 µm) are coupled in series. During the measurement, the temperature is fixed at 40°C. The analyzed samples contain 3 mg/mL of the high molecular weight acid modified alkyd surfactant dissolved in THF (ACROS ORGANICS, 99.9%, anhydrous) and 100 µL are injected in the system at a rate of 1 mL/min. The GPC provided the relative molecular mass of the polymer as a PMMA-equivalent weight average molecular weight (PMMA eq MW).

The high molecular weight acid modified alkyd surfactant described herein comprises unsaturated fatty acid residues, saturated fatty acids residues or mixtures thereof and also comprises acid groups. Acid modified alkyd surfactants are reaction products of one or more polyhydric alcohols (polyols) (such as glycerol, polyglycerol 3-10, trimethylolpropane, mono-pentaerythritol di-pentaerythritol, sorbitol, alkoxylated sorbitol, etc.), one or more polycarboxylic compounds (such as phthalic acid, , isophthalic acid, terephthalic, acid, maleic acid, aliphatic diacid, their derivatives or their anhydride) and one or more fatty acid compounds. Saturated and unsaturated fatty acid compounds may be obtained from natural and/or artificial sources. Natural sources include animal sources and/or plant sources. Animal sources may comprise animal fat, butter fat, fish oil, lard, liver fats, tuna fish oil, sperm whale oil and/or tallow oil and waxes. Plant sources may comprise waxes and/or oils such as vegetable oils and/or non-vegetable oils. Examples of plant oils include without limitation bitter gourd, borage, calendula, canola, castor, china wood, coconut, conifer seed, corn, cottonseed, dehydrated castor, flaxseed, grape seed, Jacaranda mimosifolia seed, linseed oil, palm, palm kernel, peanut, pomegranate seed, rapeseed, safflower, snake gourd, soya (bean), sunflower, tung, and/or wheat germ. Artificial sources include synthetic waxes (such as micro crystalline and/or paraffin wax), distilling tail oils and/or chemical or biochemical synthesis methods. Suitable fatty acids also include (Z)-hexadan-9-enoic[palmitoleic]acid (C₁₆H₃₀O₂), (Z)-octadecan-9-enoic[oleic]acid (C₁₈H₃₄O₂), (9Z,11E,13E)-octadeca-9,11,13-trienoic[α-eleostearic]acid (C₁₈H₃₀O₂), licanic acid, (9Z,12Z)-octadeca-9,12-dienoic[linoeic]acid (C₁₈H₃₂O₂), (5Z, 8Z,11Z,14Z)-eicosa-5,8,11,14-tetraenoic[arachidonic ]acid (C₂₀H₃₂O₂), 12-hydroxy-(9Z)-octadeca-9-enoic[ricinoleic ]acid (C₁₈H₃₄O₃), (Z)-docosan-13-enoic[erucic]acid (C₂₂H₄₂O₃), (Z)-eicosan-9-enoic[gadoleic]acid (C₂₀H₃₈O₂), (7Z,10Z,13Z,16Z,19Z)-docosa-7,10,13,16,19-pentaenoic[clupanodonic] acid and mixtures thereof. Suitable fatty acids include ethylenically unsaturated conjugated or non-conjugated C2-C24 carboxylic acids, such as myristoleic, palmitoleic, arachidonic, erucic, gadoleic, clupanadonic, oleic, ricinoleic, linoleic, linolenic, licanic, nisinic acid and eleostearic acids and mixtures thereof, typically used in the form of mixtures of fatty acids derived from natural or synthetic oils.

According to one embodiment, the high molecular weight acid modified alkyd surfactant described herein preferably has acid indicia equal to or larger than about 30, preferably larger than about 50 and more preferably larger than about 60, said acid indicia being measured by titration. In particular, a solution of the high molecular weight acid modified alkyd surfactant (1 g) in 50 mL of a 1:1 mixture of xylene/ethanol is titrated with a 0.5 M KOH aqueous solution and phenolphthalein as a pH indicator, using for example a Dosimat 776 (from Metrohm).

According to another embodiment, the radiation curable intaglio ink described herein comprises from about 5 wt-% to about 12 wt-%, preferably from about 5.5 wt-% to about 10 wt-%, of the alkylarene sulfonic acid surfactant described herein, the weight percents being based on the total weight of the radiation curable intaglio ink. The alkylarene sulfonic acid surfactant described herein is preferably a (C1-C16-alkyl)-arene sulfonic acid , such as mono-, di- and tri-(C1-C16-alkyl)-benzene sulfonic acids and mono-, di- and tri-(C1-C16- alkyl)-naphthalene sulfonic acids . Examples of alkylarene sulfonic acid surfactants include dibutylnaphtalene sulfonate, dodecyldiphenylether sulfonate, cumyl sulfonate, octylbenzene sulfonate, nonylbenzene sulfonate, dodecylbenzene sulfonate and tridecylbenzene sulfonate. Preferably, the alkylarene sulfonic acid surfactant described herein is a mono- or di-(C4-C14-alkyl)-naphthalene sulfonic acid or mono- or di- (C4-C14-alkyl)-benzene sulfonic acid, in particular a mono-(C4-C14-alkyl)-benzene sulfonic acid. More preferably, the alkylarene sulfonic acid surfactant described herein is an alkaline metal salt (e.g. sodium or potassium salt), an earth alkaline metal salt (e.g. calcium salt), an ammonium salt or alkyl substituted ammonium salt of a (C4-C14-alkyl)-arene sulfonic acid. Still more preferably, the alkylarene sulfonic acid surfactant described herein is an alkaline metal salt (e.g. sodium or potassium salt), an earth alkaline metal salt (e.g. calcium salt), an ammonium salt or alkyl substituted ammonium salt of a mono-(C4-C14-alkyl)-benzene sulfonic acid. Even more preferably, the alkylarene sulfonic acid surfactant described herein is an ammonium salt or alkyl substituted ammonium salt of a mono-(C4-C14-alkyl)-benzene sulfonic acid, in particular an ammonium salt or alkyl substituted ammonium salt of a mono-(C12-alkyl)-benzene sulfonic acid (i.e. an ammonium salt or alkyl substituted ammonium salt of dodecylbenzene sulfonic acid). A particularly suitable example of an alkylarene sulfonic acid surfactant is sold by Croda under the grade number Zephrym^{™} 3300B.

The alkylarene sulfonic acid surfactant described herein preferably has a hydrophilic balance-lipophile (HLB) greater than 8, more preferably greater than or equal to 10 and still more preferably greater than or equal to 11, wherein said HLB value and their measurement are described in "The HLB System, a time saving guide to emulsifiers selection", Ed by ICI Americas Inc. 1976.

Preferably, the radiation curable intaglio ink described herein comprises the high molecular weight acid modified alkyd surfactant described herein since said inks exhibit improved physico-chemical resistance in comparison with the radiation curable intaglio ink described herein comprising the alkylarene sulfonic acid surfactant described herein.

The radiation curable intaglio ink described herein comprises from about 10 wt-% to about 55 wt- %, preferably from about 20 wt-% to about 55 wt-%, more preferably from about 30 wt-% to about 55 wt- %, of the one or more one or more fillers or extenders described herein. The one or more fillers or extenders described herein are preferably selected from the group consisting of carbon fibers, talcs, micas (muscovites), wollastonites, calcinated clays, china clays, kaolins, carbonates (e.g. calcium carbonate, sodium aluminum carbonate), silicas and silicates (e.g. magnesium silicate, aluminum silicate), sulfates (e.g. magnesium sulfate, barium sulfate), titanates (e.g. potassium titanate), titanium dioxides, alumina hydrates, silicas, fumed silicas, montmorillonites, graphites, anatases, rutiles, bentonites, vermiculites, zinc whites, zinc sulfides, wood flours, quartz flours, corn starches, natural fibers, synthetic fibers and combinations thereof.

The radiation curable intaglio ink described herein may further comprise one or more waxes described herein. The one or more waxes described herein preferably selected from the group consisting of synthetic waxes, petroleum waxes and natural waxes. Preferably, the one or more waxes are selected from the group consisting of microcrystalline waxes, paraffin waxes, polyethylene waxes, fluorocarbon waxes, polytetrafluoroethylene waxes, Fischer-Tropsch waxes, silicone fluids, beeswaxes, candelilla waxes, montan waxes, carnauba waxes and mixtures thereof, the weight percents being based on the total weight of the radiation curable intaglio ink. When present, the one or more waxes are preferably present in an amount from about 1 wt-% to about 7 wt-%, preferably from about 3 wt-% to about 6.5 wt-%, the weight percents being based on the total weight of the radiation curable intaglio ink.

The radiation curable intaglio ink described herein may further comprise one or more coloring components selected from the group consisting of color constant pigments, dyes and mixtures thereof. When present, the one or more coloring components are preferably present in the radiation curable intaglio ink described herein in an amount from about 1 wt-% to about 10 wt-%, more preferably in an amount from about 3 wt-% to about 10 wt-%, the weight percents being based on the total weight of the radiation curable intaglio ink. According to one embodiment, the radiation curable intaglio ink described herein may further comprise one or more optically variable pigments such as those described herein and one or more coloring components such as those described herein.

The coloring components being the color constant pigments described herein may be organic or inorganic pigment particles. Typical examples of color constant organic and inorganic pigments include without limitation C.I. Pigment Yellow 12, C.I. Pigment Yellow 42, C.I. Pigment Yellow 93, 109, C.I. Pigment Yellow 110, C.I. Pigment Yellow 147, C.I. Pigment Yellow 173, C.I. Pigment Orange 34, C.I. Pigment Orange 48 , C.I. Pigment Orange 49 , C.I. Pigment Orange 61, C.I. Pigment Orange 71 C.I. Pigment Orange 73, C.I. Pigment Red 9, C.I. Pigment Red 22, C.I. Pigment Red 23, C.I. Pigment Red 57-1. C.I. Pigment Red 67, C.I. Pigment Red 122, C.I. Pigment Red 144, C.I. Pigment Red 146, C.I. Pigment Red 170, C.I. Pigment Red 177, C.I. Pigment Red 179, C.I. Pigment Red 185, C.I. Pigment Red 202, C.I. Pigment Red 224, C.I. Pigment Red 242, C.I. Pigment Red 254, C.I. Pigment Red 264, C.I. Pigment Brown 23, C.I. Pigment Blue 15, C.I. Pigment Blue 15:3, C.I. Pigment Blue 60, C.I. Pigment Violet 19, C.I. Pigment Violet 23, C.I. Pigment Violet 32, C.I. Pigment Violet 37, C.I. Pigment Green 7, C.I. Pigment Green 36, C.I. Pigment Black 7, C.I. Pigment Black 11, metal oxides, antimony yellow, lead chromate, lead chromate sulfate, lead molybdate, ultramarine blue, cobalt blue, manganese blue, chrome oxide green, hydrated chrome oxide green, cobalt green and metal sulfides, such as cerium or cadmium sulfide, cadmium sulfoselenides, zinc ferrite, bismuth vanadate, Prussian blue, Fe₃O₄, carbon black, azo, azomethine, methine, anthraquinone, phthalocyanine, perinone, perylene, diketopyrrolopyrrole, thioindigo, thiazinindigo, dioxazine, iminoisoindoline, iminoisoindolinone, quinacridone, flavanthrone, indanthrone, anthrapyrimidine and quinophthalone pigments.

Dyes suitable for the radiation curable intaglio ink described herein are known in the art, wherein said dyes may be reactive dyes, direct dyes, anionic dyes, cationic dyes, acid dyes, basic dyes, food dyes, metal-complex dyes, solvent dyes as well as mixtures thereof. Typical examples of dyes suitable for the present invention are selected from the group consisting of coumarines, cyanines, oxazines, uranines, phtalocyanines, indolinocyanines, triphenylmethanes, naphtalocyanines, indonanaphtalo-metal dyes, anthraquinones, anthrapyridones, azo dyes, rhodamines, squarilium dyes, croconium dyes and mixtures thereof. Typical examples of dyes suitable for the present invention are selected from the group consisting of C.I. Acid Yellow 1, 3, 5, 7, 11, 17, 19, 23, 25, 29, 36, 38, 40, 42, 44, 49, 54, 59, 61, 70, 72, 73, 75, 76, 78, 79, 98, 99, 110, 111, 121, 127, 131, 135, 142, 157, 162, 164, 165, 194, 204, 236, 245; C.I. Direct Yellow 1, 8, 11, 12, 24, 26, 27, 33, 39, 44, 50, 58, 85, 86, 87, 88, 89, 98, 106, 107, 110, 132, 142, 144; C.I. Basic Yellow 13, 28, 65; C.I. Reactive Yellow 1, 2, 3, 4, 6, 7, 11, 12, 13, 14, 15, 16, 17, 18, 22, 23, 24, 25, 26, 27, 37, 42; C.I. Food Yellow 3, 4; C.I. Acid Orange 1, 3, 7, 10, 20, 76, 142, 144; C.I. Basic Orange 1, 2, 59; C.I. Food Orange 2; C.I. Orange B; C.I. Acid Red 1, 4, 6, 8, 9, 13, 14, 18, 26, 27, 32, 35, 37, 42, 51, 52, 57, 73, 75, 77, 80, 82, 85, 87, 88, 89, 92, 94, 97, 106, 111, 114, 115, 117, 118, 119, 129, 130, 131, 133, 134, 138, 143, 145, 154, 155, 158, 168, 180, 183, 184, 186, 194, 198, 209, 211, 215, 219, 221, 249, 252, 254, 262, 265, 274, 282, 289, 303, 317, 320, 321, 322, 357, 359; C.I. Basic Red 1, 2, 14, 28; C.I. Direct Red 1, 2, 4, 9, 11, 13, 17, 20, 23, 24, 28, 31, 33, 37, 39, 44, 46, 62, 63, 75, 79, 80, 81, 83, 84, 89, 95, 99, 113, 197, 201, 218, 220, 224, 225, 226, 227, 228, 229, 230, 231, 253; C.I. Reactive Red 1, 2, 3, 4, 5, 6, 7, 8, 11, 12, 13, 15, 16, 17, 19, 20, 21, 22, 23, 24, 28, 29, 31, 32, 33, 34, 35, 36, 37, 38, 39, 40, 41, 42, 43, 45, 46, 49, 50, 58, 59, 63, 64, 108, 180; C.I. Food Red 1, 7, 9, 14; C.I. Acid Blue 1, 7, 9, 15, 20, 22, 23, 25, 27, 29, 40, 41, 43, 45, 54, 59, 60, 62, 72, 74, 78, 80, 82, 83, 90, 92, 93, 100, 102, 103, 104, 112, 113, 117, 120, 126, 127, 129, 130, 131, 138, 140, 142, 143, 151, 154, 158, 161, 166, 167, 168, 170, 171, 182, 183, 184, 187, 192, 193, 199, 203, 204, 205, 229, 234, 236, 249, 254, 285; C.I. Basic Blue 1, 3, 5, 7, 8, 9, 11, 55, 81; C.I. Direct Blue 1, 2, 6, 15, 22, 25, 41, 71, 76, 77, 78, 80, 86, 87, 90, 98, 106, 108, 120, 123, 158, 160, 163, 165, 168, 192, 193, 194, 195, 196, 199, 200, 201, 202, 203, 207, 225, 226, 236, 237, 246, 248, 249; C.I. Reactive Blue 1, 2, 3, 4, 5, 7, 8, 9, 13, 14, 15, 17, 18, 19, 20, 21, 25, 26, 27, 28, 29, 31, 32, 33, 34, 37, 38, 39, 40, 41, 43, 44, 46, 77; C.I. Food Blue 1, 2; C.I. Acid Green 1, 3, 5, 16, 26, 104; C.I. Basic Green 1, 4; C.I: Food Green 3; C.I. Acid Violet 9, 17, 90, 102, 121; C.I. Basic Violet 2, 3, 10, 11, 21; C.I. Acid Brown 101, 103, 165, 266, 268, 355, 357, 365, 384; C.I. Basic Brown 1; C.I. Acid Black 1, 2, 7, 24, 26, 29, 31, 48, 50, 51, 52, 58, 60, 62, 63, 64, 67, 72, 76, 77, 94, 107, 108, 109, 110, 112, 115, 118, 119, 121, 122, 131, 132, 139, 140, 155, 156, 157, 158, 159, 191, 194; C.I. Direct Black 17, 19, 22, 32, 39, 51, 56, 62, 71, 74, 77, 94, 105, 106, 107, 108, 112, 113, 117, 118, 132, 133, 146, 154, 168; C.I. Reactive Black 1, 3, 4, 5, 6, 8, 9, 10, 12, 13, 14, 18, 31; C.I. Food Black 2; C.I. Solvent Yellow 19, C.I. Solvent Orange 45, C.I. Solvent Red 8, C.I. Solvent Green 7, C.I. Solvent Blue 7, C.I. Solvent Black 7; C.I. Disperse Yellow 3, C.I. and mixtures thereof. Disperse Red 4, 60, C.I. Disperse Blue 3, metal azo dyes disclosed in US 5,074,914, US 5,997,622, US 6,001,161, JP 02-080470, JP 62-190272, JP 63-218766. When present, the one or more dyes described herein are preferably present in radiation curable intaglio ink described herein in an amount from about 1 wt-% to about 10 wt-%, preferably from about 3 to about 10 wt-%, the weight percents being based on the total weight of the radiation curable intaglio ink.

The radiation curable intaglio ink described herein may further comprise one or more optically variable pigments. When present, the one or more optically variable pigments are preferably present in the radiation curable intaglio ink described herein in an amount from about 1 to about 30 wt-%, the weight percents being based on the total weight of the radiation curable intaglio ink.

Optically variable pigments are known in the field of security printing. Optically variable pigments are used to print optically variable elements (also referred in the art as goniochromatic elements), i.e. elements which exhibit a viewing-angle or incidence-angle dependent color. Optically variable elements are used for instance to protect banknotes and other security documents against counterfeiting and/or illegal reproduction by commonly available color scanning, printing and copying office equipment. Typically, optically variable pigments may be selected from the group consisting of thin film interference pigments, interference coated pigments, cholesteric liquid crystal pigments and mixtures thereof, preferably selected from the group consisting of thin film interference pigments, magnetic thin film interference pigments, interference coated pigments and mixtures thereof.

Examples of films and pigments made from cholesteric liquid crystal materials and their preparation are disclosed in US 5,211,877; US 5,362,315 and US 6,423,246 and in EP 1 213 338 A1; EP 1 046 692 A1 and EP 0 601 483 A1. The cholesteric liquid crystal pigments may be magnetic. Suitable magnetic cholesteric liquid crystal pigments exhibiting colorshifting characteristics include without limitation magnetic monolayered cholesteric liquid crystal pigment particles and magnetic multilayered cholesteric liquid crystal pigment particles. Such pigment particles are disclosed for example in WO 2006/063926 A1, US 6,582,781 and US 6,531,221. WO 2006/063926 A1 discloses monolayers and pigment particles obtained therefrom with high brilliance and colorshifting properties with additional particular properties such as magnetizability. The disclosed monolayers and pigment particles, which are obtained therefrom by comminuting said monolayers, include a three-dimensionally crosslinked cholesteric liquid crystal mixture and magnetic nanoparticles. US 6,582,781 and US 6,410,130 disclose cholesteric multilayer pigment particles which comprise the sequence A¹/B/A², wherein A¹ and A² may be identical or different and each comprises at least one cholesteric layer, and B is an interlayer absorbing all or some of the light transmitted by the layers A¹ and A² and imparting magnetic properties to said interlayer. US 6,531,221 discloses platelet-shaped cholesteric multilayer pigment particles which comprise the sequence A/B and optionally C, wherein A and C are absorbing layers comprising pigment particles imparting magnetic properties, and B is a cholesteric layer.

Suitable thin film interference pigments exhibiting optically variable characteristics are known to those skilled in the art and disclosed in US 4,705,300; US 4,705,356; US 4,721,271; US 5,084,351; US 5,214,530; US 5,281,480; US 5,383,995; US 5,569,535, US 5,571624 and in the thereto related documents. When at least a part of the optically variable pigments consists of thin film interference pigments, it is preferred that the thin film interference pigments comprise a Fabry-Perot reflector/dielectric/absorber multilayer structure and more preferably a Fabry-Perot absorber/dielectric/reflector/dielectric/absorber multilayer structure, wherein the absorber layers are partially transmitting and partially reflecting, the dielectric layers are transmitting and the reflective layer is reflecting the incoming light. Preferably, the reflector layer is selected from the group consisting of metals, metal alloys and combinations thereof, preferably selected from the group consisting of reflective metals, reflective metal alloys and combinations thereof and more preferably selected from the group consisting of aluminum (Al), chromium (Cr), nickel (Ni), and mixtures thereof and still more preferably aluminum (Al). Preferably, the dielectric layers are independently selected from the group consisting of magnesium fluoride (MgF₂), silicium dioxide (SiO₂) and mixtures thereof and more preferably magnesium fluoride (MgF₂). Preferably, the absorber layers are independently selected from the group consisting of chromium (Cr), nickel (Ni), metallic alloys and mixtures thereof and more preferably chromium (Cr). When at least a part of the optically variable pigments consists of thin film interference pigments, it is particularly preferred that the thin film interference pigments comprise a Fabry-Perot absorber/dielectric/reflector/dielectric/ absorber multilayer structure consisting of a Cr/MgF₂/Al/MgF₂/Cr multilayer structure.

The thin film interference pigments described herein may be magnetic thin film interference pigments exhibiting optically variable characteristics are known to those skilled in the art and disclosed in US 4,838,648; WO 2002/073250 A2; EP 0 686 675 B1; WO 03/00801 A2; US 6,838,166; WO 2007/131833 A1, WO 2015/086257 A1 and in the thereto related documents. When at least a part of the optically variable pigments consists of magnetic thin film interference pigments, it is preferred that the magnetic thin film interference pigments comprise a 5-layer Fabry-Perot absorber/dielectric/reflector/ dielectric/absorber multilayer structure wherein the reflector and/or the absorber is also a magnetic layer such as disclosed in US 4,838,648 and/or 7-layer a Fabry-Perot absorber/dielectric/reflector/magnetic/reflector/dielectric/absorber multilayer structure such as disclosed in WO 02/073250; and more preferably a 7-layer Fabry-Perot absorber/dielectric/reflector/magnetic/reflector/dielectric/absorber multilayer structure. Preferred five-layer Fabry-Perot multilayer structures consist of absorber/dielectric/reflector/dielectric/absorber multilayer structures wherein the reflector and/or the absorber is also a magnetic layer, preferably the reflector and/or the absorber is a magnetic layer comprising nickel, iron and/or cobalt, and/or a magnetic alloy comprising nickel, iron and/or cobalt and/or a magnetic oxide comprising nickel (Ni), iron (Fe) and/or cobalt (Co).

Preferred six-layer Fabry-Perot multilayer structures consist of absorber/dielectric/reflector/magnetic/dielectric/absorber multilayer structures. Preferred seven-layer Fabry Perot multilayer structures consist of absorber/dielectric/re-flector/magnetic/reflector/dielectric/absorber multilayer structures such as disclosed in US 4,838,648. Preferably, the reflector layers described herein are independently made from one or more materials selected from the group consisting of metals and metal alloys, preferably selected from the group consisting of reflective metals and reflective metal alloys, more preferably selected from the group consisting of aluminum (Al), silver (Ag), copper (Cu), gold (Au), platinum (Pt), tin (Sn), titanium (Ti), palladium (Pd), rhodium (Rh), niobium (Nb), chromium (Cr), nickel (Ni), and alloys thereof, even more preferably selected from the group consisting of aluminum (Al), chromium (Cr), nickel (Ni) and alloys thereof, and still more preferably aluminum (Al). Preferably, the dielectric layers are independently made from one or more materials selected from the group consisting of metal fluorides such as magnesium fluoride (MgF₂), aluminum fluoride (AlF₃), cerium fluoride (CeF₃), lanthanum fluoride (LaF₃), sodium aluminum fluorides (e.g. Na₃AlF₆), neodymium fluoride (NdF₃), samarium fluoride (SmF₃), barium fluoride (BaF₂), calcium fluoride (CaF₂), lithium fluoride (LiF), and metal oxides such as silicon oxide (SiO), silicon dioxide (SiO₂), titanium oxide (TiO₂), aluminum oxide (Al₂O₃), more preferably selected from the group consisting of magnesium fluoride (MgF₂) and silicon dioxide (SiO₂) and still more preferably magnesium fluoride (MgF₂). Preferably, the absorber layers are independently made from one or more materials selected from the group consisting of aluminum (Al), silver (Ag), copper (Cu), palladium (Pd), platinum (Pt), titanium (Ti), vanadium (V), iron (Fe) tin (Sn), tungsten (W), molybdenum (Mo), rhodium (Rh), Niobium (Nb), chromium (Cr), nickel (Ni), metal oxides thereof, metal sulfides thereof, metal carbides thereof, and metal alloys thereof, more preferably selected from the group consisting of chromium (Cr), nickel (Ni), iron (Fe), metal oxides thereof, and metal alloys thereof, and still more preferably selected from the group consisting of chromium (Cr), nickel (Ni), and metal alloys thereof. Preferably, the magnetic layer comprises nickel (Ni), iron (Fe) and/or cobalt (Co); and/or a magnetic alloy comprising nickel (Ni), iron (Fe) and/or cobalt (Co); and/or a magnetic oxide comprising nickel (Ni), iron (Fe) and/or cobalt (Co). When magnetic thin film interference pigment particles comprising a seven-layer Fabry-Perot structure are preferred, it is particularly preferred that the magnetic thin film interference pigment particles comprise a seven-layer Fabry-Perot absorber/dielectric/reflector/magnetic/reflector/dielectric/absorber multilayer structure consisting of a Cr/MgF₂/Al/M/Al/MgF₂/Cr multilayer structure, wherein M a magnetic layer comprising nickel (Ni), iron (Fe) and/or cobalt (Co); and/or a magnetic alloy comprising nickel (Ni), iron (Fe) and/or cobalt (Co); and/or a magnetic oxide comprising nickel (Ni), iron (Fe) and/or cobalt (Co). The magnetic thin film interference pigment particles described herein may be multilayer pigment particles being considered as safe for human health and the environment and being based for example on five-layer Fabry-Perot multilayer structures, six-layer Fabry-Perot multilayer structures and seven-layer Fabry-Perot multilayer structures, wherein said pigment particles include one or more magnetic layers comprising a magnetic alloy having a substantially nickel-free composition including about 40 wt-% to about 90 wt-% iron, about 10 wt-% to about 50 wt-% chromium and about 0 wt-% to about 30 wt-% aluminum. Typical examples of multilayer pigment particles being considered as safe for human health and the environment can be found in EP 2 402 401 A1.

interference coated pigments include without limitation structures consisting of a substrate selected from the group consisting of metallic cores such as titanium, silver, aluminum, copper, chromium, iron, germanium, molybdenum, tantalum or nickel coated with one or more layers made of metal oxides as well as structure consisting of a core made of synthetic or natural micas, another layered silicates (e.g. talc, kaolin and sericite), glasses (e.g. borosilicates), silicium dioxides (SiO₂), aluminum oxides (Al₂O₃), titanium oxides (TiO₂), graphites and mixtures thereof coated with one or more layers made of metal oxides (e.g. titanium oxides, zirconium oxides, tin oxides, chromium oxides, nickel oxides, copper oxides and iron oxides), the structures described hereabove have been described for example in Chem. Rev. 99 (1999), G. Pfaff and P. Reynders, pages 1963-1981 and WO 2008/083894. Typical examples of these interference coated pigments include without limitation silicium oxide cores coated with one or more layers made of titanium oxide, tin oxide and/or iron oxide; natural or synthetic mica cores coated with one or more layers made of titanium oxide, silicium oxide and/or iron oxide, in particular mica cores coated with alternate layers made of silicium oxide and titanium oxide; borosilicate cores coated with one or more layers made of titanium oxide, silicium oxide and/or tin oxide; and titanium oxide cores coated with one or more layers made of iron oxide, iron oxide-hydroxide, chromium oxide, copper oxide, cerium oxide, aluminum oxide, silicium oxide, bismuth vanadate, nickel titanate, cobalt titanate and/or antimony-doped, fluorine-doped or indium-doped tin oxide; aluminum oxide cores coated with one or more layers made of titanium oxide and/or iron oxide. The interference coated pigments described herein may be magnetic and comprise one or more magnetic materials, wherein said pigments consist of a substrate selected from the group consisting of a core coated with one or more layers, wherein at least one of the core or the one or more layers have magnetic properties. For example, suitable interference coated pigments comprise a core made of a magnetic material such as those described hereabove, said core being coated with one or more layers made of one or more metal oxides, or they have a structure consisting of a core made of synthetic or natural micas, layered silicates (e.g. talc, kaolin and sericite), glasses (e.g. borosilicates), silicon dioxides (SiO₂), aluminum oxides (Al₂O₃), titanium oxides (TiO₂), graphites and mixtures of two or more thereof. Furthermore, one or more additional layers such as coloring layers may be present.

For embodiments wherein magnetic optically variable pigments are comprised in the radiation curable intaglio ink described herein, said pigments may be further oriented after intaglio printing and before curing, through the application of an appropriate magnetic field and consecutively fixed in their respective positions and orientations by curing the applied ink.

The radiation curable intaglio ink described herein may further comprise one or more UV stabilizers in order to stabilize said ink in particular during its storage. Typical examples of suitable UV stabilizers include without limitation hydroquinone, hydroquinone monomethyl ether, 4-t-butylcatechol, 4-t-butyl-phenol, 2,6-di-t-butyl-4-methyl-phenol (BHT), pyrogallol, phenothiazine (PTZ), 2,4-diazabicyclo[2.2.2] octane (DABCO), copper (II) salts (such as e.g. copper (II) phenoxide, copper (II) acetylacetonate, copper (II) gluconate, copper (II) tartrate, copper (II) acetate, copper (II) carbamate, copper (II) thiocarbamate, copper (II) dithiocarbamate or copper (II) dimethyl dithiocarbamate), copper (I) salts (such as e.g. copper (I) chloride or copper (I) acetate), tris[N-(hydroxyl-KO)-N-(nitroso-KO)benzenaminato]-aluminum as well as any mixtures thereof. When present, the one or more UV stabilizers described herein are preferably present in the radiation curable intaglio ink described herein in an amount from about 0.1 wt-% to about 3 wt-%, more preferably in an amount from about 0.1 wt-% to about 2.5 wt-%, the weight percents being based on the total weight of the radiation curable intaglio ink.

The radiation curable intaglio ink described herein may further comprise one or more machine readable materials. When present, the one or more machine readable materials are preferably selected from the group consisting of magnetic materials, luminescent materials, electrically conductive materials, infrared-absorbing materials and mixtures thereof. As used herein, the term "machine readable material" refers to a material which exhibits at least one distinctive property which is detectable by a device or a machine and which can be comprised in a layer so as to confer a way to authenticate said layer or article comprising said layer by the use of a particular equipment for its detection and/or authentication.

According to one embodiment, the one or more machine readable materials are magnetic materials, preferably magnetic pigments particles comprising a magnetic core (preferably made of nickel, cobalt, iron and iron containing alloys and oxides) and surrounded by one or more additional layers made of one or more materials selected from the group consisting of organic materials and group of inorganic materials such as those described for example in WO 2010/115986 A2 and WO 2016/005158 A1. The organic materials described herein are preferably selected from the group consisting of polyacrylates, polystyrenes, parylenes, alkoxysilanes and mixtures thereof. The inorganic materials described herein are preferably selected from the group consisting of metals (preferably selected from the group consisting of silver, aluminum and gold), metal oxides (preferably selected from the group consisting of MgO and ZnO, Al₂O₃, Y₂O₃, Ln₂O₃ (wherein Ln is a lanthanide), SiOz, TiOz, ZrO₂, CeO₂ and mixtures thereof) and metal sulfides (preferably selected from the group consisting of ZnS; CaS and mixtures thereof).

According to one embodiment, one or more machine readable materials are infrared-absorbing materials. IR absorbing materials include inorganic materials, glasses comprising substantial amounts of IR-absorbing atoms or ions or entities which display IR-absorption as a cooperative effect, IR absorbing organic compounds and IR absorbing organometallic compounds (complexes of cation(s) with organic ligand(s), wherein either the separate cation and/or the separate ligand, or both in conjunction, have IR-absorbing properties). Non-limiting examples of IR absorber compounds for use in the present invention include those disclosed in WO 2007/060133 A2, wherein the IR absorbing compound comprises a transition element compound and whose infrared absorption is a consequence of electronic transitions within the d-shell of transition element atoms or ions such as those described in WO 2007/060133 A2. Examples of IR absorbing compounds disclosed in WO 2007/060133 A2 include copper(II) fluoride (CuF₂), copper hydroxyfluoride (CuFOH), copper hydroxide (Cu(OH)₂), copper phosphate hydrate (Cu₃(PO₄)₂*2H₂O), anhydrous copper phosphate (Cu₃(PO₄)₂), basic copper(II) phosphates (e.g. Cu₂PO₄(OH), "Libethenite" whose formula is sometimes written as Cu₃(PO₄) 2*Cu(OH)₂; Cu₃(PO₄)(OH)₃, "Cornetite", Cu₅(PO₄)₃(OH)₄, "Pseudomalachite", CuAl₆(PO₄)₄(OH)₈•5H₂O "Turquoise", etc.), copper (II) pyrophosphate (Cu₂(P₂O₇)*3H₂O), anhydrous copper(II) pyrophosphate (Cu₂ (P₂O₇)), copper(II) metaphosphate (Cu(PO₃)₂, more correctly written as Cu₃(P₃O₉)₂), iron(II) fluoride (FeF₂*4H₂O), anhydrous iron(II) fluoride (FeF₂), iron(II) phosphate (Fe₃(PO₄)₂*8H₂O, "Vivianite"), lithium iron(II) phosphate (LiFePO₄, "Triphylite") , sodium iron(II) phosphate (NaFePO₄, "Maricite"), iron(II) silicates (Fe₂SiO₄, "Fayalite"; FexMg₂xSiO₄, "Olivine"), iron(II) carbonate (FeCOs, "Ankerite", "Siderite"); nickel(II) phosphate (Ni₃(PO₄)₂*8H₂O), and titanium(III) metaphosphate (Ti(P₃O₉)). Moreover, a crystalline IR absorbing material may also be a mixed ionic compound, i.e., where two or more cations are participating in the crystal structure, as e.g. in Ca₂Fe(PO₄)₂*4H₂O, "Anapaite". Similarly, two or more anions can participate in the structure as in the mentioned basic copper phosphates, where OH⁻ is the second anion, or even both together, as in magnesium iron phosphate fluoride, MgFe(PO₄)F, "Wagnerite".

Non-limiting examples of IR absorber compounds for use in the present invention also include those disclosed in the co-pending application PCT/EP2019/054055, wherein the IR absorbing compounds are selected from the group consisting of crystal water-free iron(II) orthophosphates of the general formula Fe₃(PO₄)₂ and having a graftonite crystal structure, crystal water-free iron(ii) metal orthophosphates, crystal water-free iron(II) metal phosphonates, crystal water-free iron(II) metal pyrophosphates, crystal water-free iron(II) metal metaphosphates of the general formula FeₐM_{b}(PO_{c})_{d}, where a is a number from 1 to 5, b is a number from >0 to 5, c is a number from 2.5 to 5, d is a number from 0.5 to 3 and M represents one or more metals selected from the group consisting of Li, Na, K, Rb, Cs, Mg, Ca, Sr, Ba, the transition metals (d block), in particular Sc, Y, La, Ti, Zr, Hf, Nb, Ta, Cr, Mo, W, Mn, Cu, Zn, Co, Ni, Ag, Au, the metals and semimetals of the third, fourth and fifth main groups, in particular B, Al, Ga, In, Si, Sn, Sb, Bi and the lanthanoids, and mixtures thereof.

Non-limiting examples of IR absorber compounds for use in the present invention also include doped tin oxides (such as for example antimony tin oxide, ATO), doped indium oxides (such as for example indium tin oxide, ITO), reduced tungsten oxides, tungsten bronzes and mixtures thereof.

The IR absorber compounds described herein may be used alone or may be used in combinations thereof.

The radiation curable intaglio ink described herein may further comprise one or more additives, said one or more additives including without limitation compounds and materials which are used for adjusting physical, rheological and chemical parameters of the intaglio ink such as the consistency (e.g. anti-settling agents and plasticizers), the lubricating properties (waxes), the adhesion properties, the surface properties (wetting agents, oleophobic and hydrophobic agents), the drying/curing properties (cure accelerators, sensitizers, crosslinkers), *etc.* Additives described herein may be present in the radiation curable intaglio inks described herein in amounts and in forms known in the art, including in the form of so-called nano-materials where at least one of the dimensions of the additives is in the range of 1 to 1000 nm.

The present invention further provides processes for producing the radiation curable intaglio inks described herein and radiation curable intaglio inks obtained therefrom. The radiation curable intaglio inks described herein may be prepared by mixing all the ingredients, for example with a speedmixer, thus forming pastes. The so-formed pastes are then fully mixed and dispersed using for example a three roll mill to produce homogeneous pasty intaglio inks.

The radiation curable intaglio ink described herein are suitable to be applied by intaglio printing on the substrate described herein for producing a security feature in the form of a pattern or image. The present invention provides processes for producing a pattern or image and patterns or images obtained therefrom. The radiation curable, in particular the UV-Vis curable, intaglio ink described herein can be used on a standard intaglio press fitted with radiation lamps, in particular UV-Vis lamps, including low energy lamps (LE or HUV) and LED lamps. The process described herein comprises a step a) of inking an intaglio engraved printing plate with the radiation curable intaglio ink described herein.

As mentioned herein, during intaglio printing processes, a rotating intaglio cylinder carrying a plate engraved with a pattern or image to be printed is supplied with ink by one or by a plurality of selective inking cylinder(s) (or chablon cylinder), each selective inking cylinder being inked in at least one corresponding color. Subsequently to the step a) described herein, the process described herein further comprises a step b) of wiping off any excess of the radiation curable intaglio ink. In particular, the intaglio printing process involves a wiping off any ink excess present on the surface of the intaglio printing plate. In the process described herein, the wiping off process is carried out using a polymeric wiping cylinder and said polymeric wiping cylinder is then cleaned with an alkaline aqueous wiping solution in combination with one or more mechanical means, in particular one or more brushes and/or pads (e.g. Scotch-Brite^{™} pads) so as to remove the ink emulsified with the alkaline wiping solution from the polymeric wiping cylinder. Subsequently to the wiping step, the process described herein comprises a step c) of printing the pattern or image with the intaglio engraved printing plate by applying the radiation curable intaglio ink onto the substrate. In other words, subsequently to the wiping step b), the inked intaglio plate is brought into contact with the substrate described herein, and the radiation curable intaglio ink is transferred under pressure from the engravings of the intaglio printing plate onto the substrate to be printed thus forming a thick printing pattern or image on the substrate. Subsequently to the step c) described herein, the process described herein further comprises a step d) of curing the radiation curable, in particular the UV-Vis curable, intaglio ink by radiation, in particular UV-Vis radiation.

Fig. 1A and 1B show schematic representations of intaglio printing presses, wherein the printing press of Fig. 1A operates with a direct inking process and the printing press of Fig. 1B operates with an indirect inking process (Orlof process). As shown in Fig. 1A and 1B, the rotating intaglio cylinder (100) carries intaglio plates, i.e. plates engraved with a pattern or image to be printed. ink trains are used to facilitate the distribution and the transfer of the ink from a fountain to the cylinder carrying the intaglio plate. The fountain functions as a reservoir of intaglio ink. Three ink trains for three intaglio inks are depicted in Fig. 1A and 1B, wherein each intaglio ink is supplied from its individual ink fountain and wherein each of said three ink trains independently consists in a series of rollers comprising an inking roller (110, 112, 114) coated with a polymeric material and a chablon (111, 113, 115). Since a chablon is inked by its associated inking device and thus transfers one ink to the associated cylinder (100) (direct process) or to the collecting cylinder (160) (indirect process), it is are also referred in the literature as a selective inking cylinder.

According to one embodiment wherein the process described herein uses a direct inking process (Fig. 1A), the inking roller (110, 112, 114) transfers the corresponding intaglio ink to the chablon (111, 113, 115), which consists of a sheet comprising some relief on which the ink is deposited and which is located between inking roller (110,112, 114) and the intaglio plate on the cylinder (100). The ink is forced from the relief of the chablon into the engravings of the intaglio plate. Whereas the intaglio ink is transferred from the chablon (111, 113, 115) into the engravings of the intaglio plate, some ink excess may also be transferred onto the non-engraved surface of the plate. Accordingly, the process described herein comprises the step of wiping off any excess of the radiation curable, in particular the UV-Vis curable, intaglio ink described herein using a polymeric wiping cylinder and an alkaline aqueous wiping solution. The ink excess on the surface of the plate cylinder is removed by wiping the intaglio cylinder carrying the intaglio plate (100) with the polymeric wiping cylinder (120) and cleaning said polymeric wiping cylinder (120) with the alkaline aqueous wiping solution in combination with one or more mechanical means, in particular one or more brushes and/or pads (e.g. Scotch-Brite^{™} pads). The process described herein further comprises the step of printing the pattern or image with the intaglio engraved printing plate by applying the radiation curable, in particular the UV-Vis curable, intaglio ink onto the substrate. Subsequently to the wiping step, the inked intaglio plate is brought into contact with the substrate described herein and the ink is transferred under pressure from the engravings of the intaglio printing plate onto the substrate to be printed thus forming the pattern or image on the substrate. From the plate cylinder (100), the ink is transferred to the substrate to be printed (130) under high pressure, to form the printed intaglio pattern or image (180). Typically, a pressure of several tens to several hundreds of kN is applied during an intaglio printing process. A counter-pressure cylinder (170) is located on the opposite side of the substrate. The ink fountains, the rollers (110, 112 and 114) of the ink trains, and the plate cylinder (100) are usually equipped with temperature control system. Typical settings for intaglio printing press involve the ink fountain being kept at 20°C while the intaglio cylinder is maintained at a temperature between about 60°C to about 80°C.

According to one embodiment wherein the process described herein uses an indirect inking process (Orlof process) (Fig. 1B) wherein the inking roller (110, 112, 114) transfers the corresponding intaglio ink to the chablon (111, 113, 115), which consists of a sheet comprising some relief on which the ink is deposited and then to a collecting cylinder (160), called the "*blanket*"*.* The collecting cylinder (160) then transfers the ink to the cylinder (100) carrying the intaglio plate. Whereas the intaglio ink is transferred from the chablon (111, 113, 115) to the collecting cylinder (160) and into the engravings of the intaglio plate, some ink excess may also be transferred onto the non-engraved surface of the plate. Accordingly, the process described herein comprises the step of wiping off any excess of the radiation curable, in particular the UV-Vis curable, intaglio ink described herein using the polymeric wiping cylinder and cleaning said cleaning said polymeric wiping cylinder (120) with the alkaline aqueous wiping solution in combination with one or more mechanical means, in particular one or more brushes and/or pads (e.g. Scotch-Brite^{™} pads).

The process described herein further comprises the step of printing the pattern or image with the intaglio engraved printing plate by applying the radiation curable, in particular the UV-Vis curable, intaglio ink onto the substrate. Subsequently to the wiping step, the inked intaglio plate is brought into contact with the substrate described herein and the ink is transferred under pressure from the engravings of the intaglio printing plate onto the substrate to be printed thus forming the pattern or image on the substrate. From the plate cylinder (100), the ink is transferred to the substrate to be printed (130) under high pressure, to form the printed intaglio features (180) in the form of patterns or images. Typically, a pressure of several tens to several hundreds of kN is applied during an intaglio printing process. A counter-pressure cylinder (170) is located on the opposite side of the substrate.

The polymeric wiping cylinder described herein is typically made of polyvinyl chloride (PVC) or rubber, preferably PVC.

Typically, suitable aqueous alkaline solutions comprise from about 0.3 wt-% to about 1.2 w-%, preferably about 0.8 wt-%,of a strong base, such as for example caustic soda, and between about 0.3 wt- % to about 1.0 wt-%, preferably about 0.5 wt-%, of a surfactant such as for example sulfated/sulfonated castor oil (SCO), the weight percents being based on the total amount of the aqueous alkaline solutions.

The process described herein further comprises a step d) of curing the radiation curable, in particular the UV-Vis curable, intaglio ink by radiation, in particular UV-Vis radiation. As shown in Fig. 1A and 1B, the intaglio printing press either used in the process described herein with a direct inking process or used in the process described herein with an indirect inking process comprises a source of radiation (150), in particular a UV-Vis radiation source, for the curing of the radiation curable, in particular the UV-Vis curable, intaglio ink.

The present invention further provides patterns or images acting as security features made of the radiation curable intaglio ink described herein on the substrate described herein.

The substrates described herein may be in sheet form or web form and are preferably selected from the group consisting of papers or other fibrous materials (including woven and non-woven fibrous materials), such as cellulose, paper-containing materials, glasses, metals, ceramics, plastics and polymers, metallized plastics or polymers, composite materials and mixtures or combinations of two or more thereof. Typical paper, paper-like or other fibrous materials are made from a variety of fibers including without limitation abaca, cotton, linen, wood pulp, and blends thereof. As is well known to those skilled in the art, cotton and cotton/linen blends are preferred for banknotes, while wood pulp is commonly used in non-banknote security documents. Typical examples of plastics and polymers include polyolefins such as polyethylene (PE) and polypropylene (PP) including biaxially oriented polypropylene (BOPP), polyamides, polyesters such as polyethylene terephthalate) (PET), poly(1,4-butylene terephthalate) (PBT), polyethylene 2,6-naphthoate) (PEN) and polyvinylchlorides (PVC). Spunbond olefin fibers such as those sold under the trademark Tyvek^{®} may also be used as substrate. Typical examples of metalized plastics or polymers include the plastic or polymer materials described hereabove having a metal disposed continuously or discontinuously on their surface. Typical examples of metals include without limitation aluminum (Al), chromium (Cr), copper (Cu), gold (Au), silver (Ag), alloys thereof and combinations of two or more of the aforementioned metals. The metallization of the plastic or polymer materials described hereabove may be done by an electrodeposition process, a high-vacuum coating process or by a sputtering process. Typical examples of composite materials include without limitation multilayer structures or laminates of paper and at least one plastic or polymer material such as those described hereabove as well as plastic and/or polymer fibers incorporated in a paper-like or fibrous material such as those described hereabove. Of course, the substrate can comprise further additives that are known to the skilled person, such as fillers, sizing agents, whiteners, processing aids, reinforcing or wet strengthening agents, *etc.*

With the aim of further increasing the security level and the resistance against counterfeiting and illegal reproduction, the substrate described herein may contain printed, coated, or laser-marked or laser-perforated indicia, watermarks, security threads, fibers, planchettes, luminescent compounds, windows, foils, decals, primers and combinations of two or more thereof.

With the aim of increasing the durability through soiling or chemical resistance and cleanliness and thus the circulation lifetime of substrates and security documents or with the aim of modifying their aesthetical appearance (e.g. optical gloss), one or more protective layers may be further applied on top of the intaglio printed pattern or image described herein. When present, the one or more protective layers are typically made of protective varnishes which may be transparent or slightly colored or tinted and may be more or less glossy. Protective varnishes may be radiation curable compositions, thermal drying compositions or any combination thereof. Preferably, the one or more protective layers are made of radiation curable compositions, and more preferably of UV-Vis curable compositions.

As mentioned hereabove, the patterns or images described herein may be used as security features for protecting and authenticating a security document or decorative elements.

Typical examples of decorative elements or objects include without limitation luxury goods, cosmetic packaging, automotive parts, electronic/electrical appliances, furniture and fingernail articles.

Security documents include without limitation value documents and value commercial goods. Typical example of value documents include without limitation banknotes, deeds, tickets, checks, vouchers, fiscal stamps and tax labels, agreements and the like, identity documents such as passports, identity cards, visas, driving licenses, bank cards, credit cards, transactions cards, access documents or cards, entrance tickets, public transportation tickets, academic diploma or titles and the like, preferably banknotes, identity documents, right-conferring documents, driving licenses and credit cards. The term "value commercial good" refers to packaging materials, in particular for cosmetic articles, nutraceutical articles, pharmaceutical articles, alcohols, tobacco articles, beverages or foodstuffs, electrical/electronic articles, fabrics or jewelry, i.e. articles that shall be protected against counterfeiting and/or illegal reproduction in order to warrant the content of the packaging like for instance genuine drugs. Examples of these packaging materials include without limitation labels, such as authentication brand labels, tamper evidence labels and seals. It is pointed out that the disclosed substrates, value documents and value commercial goods are given exclusively for exemplifying purposes, without restricting the scope of the invention.

### EXAMPLES

The present invention is now described in more details with reference to non-limiting examples. The Examples below provide more details for the preparation and use of radiation, in particular UV, curable intaglio inks for printing a security feature.

Two series of UV-Vis curable intaglio inks according to the present invention (see Tables 1A-B) have been prepared and printed on a substrate:
E1-E4: UV-Vis curable intaglio inks comprising a) one or more radiation curable compounds, wherein at least one of said one or more radiation curable compounds was a fatty acid polyester acrylate oligomer (E1-E4), optionally at least another of the one or more radiation curable compounds was a (meth)acrylate monomer reactive diluent (E1-E3), and optionally at least another of the one or more radiation curable compounds was an epoxy (meth)acrylate oligomer (E3), b) a photoinitiator, c) a high molecular weight acid modified alkyd surfactant, d) one or more fillers, e) one or more waxes, fj one or more pigments and g) one or more UV stabilizers. Comparative inks C1-C4 respectively comprised an acrylate oligomer, urethane oligomer, epoxy acrylate oligomer or chlorinated polyester oligomer, a (meth)acrylate monomer reactive diluent and a high molecular weight acid modified alkyd surfactant (i.e. was lacking the fatty acid polyester acrylate oligomer) while comparative ink C5 comprises fatty acid polyester acrylate oligomer and a (meth)acrylate monomer reactive diluent (i.e. was lacking the high molecular weight acid modified alkyd surfactant).
E5: UV-Vis curable intaglio ink comprising a) one or more radiation curable compounds, wherein at least one of one or more radiation curable compounds was a fatty acid polyester acrylate oligomer and at least another of the one or more radiation curable compounds was a (meth)acrylate monomer reactive diluent, b) a photoinitiator, c) an alkylbenzene sulfonic acid surfactant, d) one or more fillers, e) one or more waxes, fj one or more pigments and g) one or more UV stabilizers. Comparative inks C6-C9 respectively comprised an acrylate oligomer, urethane oligomer, epoxy acrylate oligomer or chlorinated polyester oligomer, a (meth)acrylate monomer reactive diluent and an alkylbenzene sulfonic acid surfactant (i.e. was lacking the fatty acid polyester acrylate oligomer)

### Synthesis of the high molecular weight acid modified alkyd surfactant

The high molecular weight acid modified alkyd surfactant comprised in C1-C4 and E1-E4 was prepared according to the Example II, Part 1 of EP 0 340 163 B1, by polycondensation for 5 hours at 220°C of trimethylolpropane (CAS no: 77-99-6, 99.9% from Penpet) (9 wt-%), pentaerythritol (CAS no: 115-77-5, 98% from Perstop) (6 wt-%), ethoxylated sorbitol (CAS no: 53694-15-8, Sorbitol 20 x ethoxylated, 99.9% from KLK OLEO) (8 wt%) as polyols, isophthalic acid (CAS no: 121-91-5, 99.9% from Perstop) (14 wt-%) and 1,2,3,6-tetrahydrophthalic anhydride (CAS no: 85-43-8, 99.5% from Polynt) (13 wt-%) as polyacids and conjugated fatty acid sunflower oil (CAS no: 68953-27-5, solid content >99.9% from Smit) (34 wt-%) as fatty acid. The resulting polycondensation product was diluted at room temperature with ethyldiglycol (CAS no: 111-90-0, 99.9% from Brenntag) (16 wt-%).

The so-obtained acid modified alkyd surfactant had an acid number of 60 mg KOH/g (as described hereafter) and a mass average molecular weight M_{w} of about 6'600 g/mol (as described hereafter).

### Molecular weight measurement method

The weight average molecular weight of the high molecular weight acid modified alkyd surfactant was determined by GPC (gel permeation chromatography) using an Agilent GPC50+, said device being equipped with an isocratic pump, a degasser, an autosampler and a triple detector comprising a differential refractometer, a viscosimeter and a double-angle light scattering detector (15° and 90°). For this specific measurement, only the differential refractometer was used. A calibration curve (log(molecular mass) = f(retention volume)) was established using twelve polymethyl methacrylate (PMMA) standards (with molecular masses ranging from 650 to 2'299'000 g/mol). One guard-column (column length 50 mm, internal diameter 7.5 mm) and three columns Polargel M, M and L (column length 300 mm, internal diameter 7.5 mm; stationary phase: hydrophobic and hydrophilic copolymers with a particle size of 8 µm) were coupled in series. During the measurement, the temperature was fixed at 40°C. The analyzed sample contained 3 mg/mL of the high molecular weight acid modified alkyd surfactant dissolved in THF (ACROS ORGANICS, 99.9 %, anhydrous) and 100 µL were injected at a rate of 1 mL/min. The GPC provided the relative molecular mass of the surfactant as a PMMA-equivalent weight average molecular weight (PMMA eq MW).

### Acid number of the macromolecular surfactant measurement method

The acid number of the high molecular weight acid modified alkyd surfactant was determined by titration. A solution of said surfactant (1 g) in 50 mL of a 1:1 mixture of xylene (99% from Thommen-Furler AG)/ethanol (99% from ACROS ORGANICS) was titrated with a 0.5 M KOH aqueous solution and phenolphthalein as a pH indicator, using a Dosimat 776 (from Metrohm). The 0.5 M KOH solution was added until the titrated solution turned from colorless to purple. The provided acid number value consists of an average of three measurements.

### Preparation of the UV-Vis curable intaglio inks E1-E5 and C1-C9 (see Tables 1A-B)

Ingredients respectively listed in Tables 1A-B were independently mixed at room temperature with a DAC 150 SP CM 31 speedmixer (Hauschild) for 3 minutes at 2500 rpm. The resulting pastes were independently ground on a SDY200 three roll mill (Bühler) in three passes at 25°C (a first pass at a pressure of 8 bars, a second and a third pass at a pressure of 11 bars).

Viscosity values provided in Tables 1A-B were independently measured on each of the UV-Vis curable intaglio ink with a Haake Roto Visco 1 rotational rheometer (C20/0.5°; at 40°C and 200 sec⁻¹).

### Comments for Tables 1A-B

"^{a}": the comparative ink C2 comprised a total amount of the reactive diluent propoxylated glycerol triacrylate of: 8 wt-% (from EBECRYL^{®} 53) +4.2 wt-% (from EBECRYL^{®} 3608).
"^{b}": the comparative ink C3 comprised an amount of the reactive diluent trimethylolpropane triacrylate of 6.3 wt-% (from EBECRYL^{®} 1606).
"^{c}": the comparative ink C4 comprised a total amount of reactive diluent propoxylated glycerol triacrylate of: 8 wt-% (from EBECRYL^{®} 53) +11.2 wt-% (from EBECRYL^{®} 438).
"^{d}": the ink according to the invention E3 comprised an amount of the reactive diluent trimethylolpropane triacrylate of 1.08 wt-% (from EBECRYL^{®} 1606).
"^{e}": the comparative ink C8 comprised a total amount of reactive diluent propoxylated glycerol triacrylate of: 8 wt-% (from EBECRYL^{®} 53) +4.2 wt-% (from EBECRYL^{®} 3608).
"^{f}": the comparative ink C9 comprised an amount of the reactive diluent trimethylolpropane triacrylate of 6.3 wt-% (from EBECRYL^{®} 1606).

### Detergeability test of the radiation curable intaglio inks

Even though the radiation curable intaglio inks according to the invention have been developed to be printed by an intaglio printing process wherein any excess of said ink is wiped off from the printing plate using a polymeric wiping cylinder and wherein said polymeric wiping cylinder is cleaned with an alkaline aqueous wiping solution in combination with one or more mechanical means such as brushes and/or pads, the detergeability test has been carried out as described hereafter.

10 ± 2 mg of each of the UV-Vis curable intaglio inks of Tables 1A-B were independently applied on a PVC plate as a disc layer having a diameter of about 15 mm.

Five drops of a standard aqueous wiping solution containing 0.8 wt-% of caustic soda and 0.5 wt- % of sulfated/sulfonated castor oil were added dropwise on top of the ink disc layer. Mixing of the ink and the wiping solution was performed by fingertip rubbing the mixture for about 30 seconds.

Subsequently, the mixture of the at least partially emulsified UV-Vis curable intaglio inks in the aqueous wiping solution was independently removed from the PVC plate by gently cleaning the plate with a fabric. The plate was visually checked for the presence or not of any residues of the UV-Vis curable intaglio ink layer.

Detergeability for each of the UV-Vis curable intaglio inks are provided in Tables 1A-B, wherein a combination of full emulsification and complete removal of the corresponding UV-Vis curable intaglio ink from the PVC plate was rated as positive result (expressed by "Y"), and wherein a lack of combination of full emulsification and/or complete removal of the corresponding UV-Vis curable intaglio ink from the PVC plate was rated as negative result (expressed by "N").

As shown in Tables 1A-B, all the comparative inks C1-C9 failed to pass the detergeability test, either as a result of lack or poor emulsification of the ink with the aqueous wiping solution and/or as a result of residual ink on the PVC plate upon gently cleaning with a fabric.

On the one hand, the lack of the fatty acid polyester acrylate oligomer in the comparative inks comprising the high molecular weight acid modified alkyd surfactant (C1-C4) or the lack of the fatty acid polyester acrylate oligomer in the comparative inks comprising the alkylbenzene sulfonic acid surfactant (C6-C9) resulted in poor performing UV-Vis curable intaglio inks. On the other hand, the lack of the high molecular weight acid modified alkyd surfactant in the comparative ink comprising the fatty acid polyester acrylate oligomer (C5) also resulted in a poor performing UV-Vis curable intaglio ink.

The UV-Vis curable intaglio ink according to the invention (E1-E5) exhibited a good stability in terms of pot life /shelf life as they did not show any formation of skin on their surface upon storage (for at least 30 days.

**Table 1A**

| **Ingredients** | **C1** | **C2^{a}** | **C3^{b}** | **C4^{c}** | **C5** | **E1** | **E2** | **E3^{d}** | **E4** |
|---|---|---|---|---|---|---|---|---|---|
| | Amount [wt-%] | | | | | | | | |
| EBECRYL^{®} 1657 (Allnex) | | | | | 28 | 28 | 10 | 4.8 | |
| Fatty acid polyester acrylate oligomer: stearic/palmitic acid polyester tetraacrylate | | | | | | | | | |
| EBECRYL^{®} 450 (Allnex) | | | | | | | | | 36 |
| Fatty acid polyester acrylate oligomer: stearic/palmitic acid polyester hexaacrylate | | | | | | | | | |
| GENOMER* 4316 (RAHN) | 28 | | | | | | | | |
| Urethane acrylate oligomer: aliphatic polyester urethane triacrylate oligomer | | | | | | | | | |
| EBECRYL^{®} 3608 (Allnex) | | 28 | | | | | | | |
| Epoxy acrylate oligomer: bisphenol-A epoxy diacrylate oligomer diluted in 15% of propoxylated glycerol triacrylate | | | | | | | | | |
| EBECRYL^{®} 1606 (Allnex) | | | 28 | | | | | 4.8 | |
| Epoxy acrylate oligomer: bisphenol-A epoxy diacrylate oligomer diluted in 20-25% trimethylolpropane triacrylate (CAS no: 55818-57-0 in 15625-89-5) | | | | | | | | | |
| EBECRYL^{®} 438 (Allnex) | | | | 28 | | | | | |
| Chlorinated polyester oligomer diluted with 40% of propoxylated glycerol triacrylate | | | | | | | | | |
| EBECRYL^{®} 53 (Allnex) | 8 | 8 | 8 | 8 | 8 | 8 | 8 | 14.2 | |
| Reactive diluent: propoxylated glycerol triacrylate (CAS no: 52408-84-1) | | | | | | | | | |
| High molecular weight acid modified alkyd surfactant (see details hereabove) | 10 | 10 | 10 | 10 | - | 10 | 10 | 9.5 | 10 |
| Omnirad 819 (IGM) | 8 | 8 | 8 | 8 | 8 | 8 | 8 | 7.6 | 8 |
| Photoinitiator: bis(2,4,6-trimethylbenzoyl)phenylphosphineoxide (CAS no: 162881-26-7) | | | | | | | | | |
| Omyalite 50 (Omya) | 32 | 32 | 32 | 32 | 42 | 32 | 50 | 45.7 | 32 |
| Filler: calcium carbonate (CAS no: 1317-65-3) | | | | | | | | | |
| Finntalc M15 (Mondo Mineralis) | 3 | 3 | 3 | 3 | 3 | 3 | 3 | 2.9 | 3 |
| Filler: talc (Mg-Silicate) (CAS no: 14807-96-6) | | | | | | | | | |
| Carnauba waxT1 + T3 (A. Smit Trading AG) | 4 | 4 | 4 | 4 | 4 | 4 | 4 | 3.8 | 4 |
| Wax: Carnauba wax (CAS no: 8015-86-9) | | | | | | | | | |
| Heliogen Blue D 7079 (BASF) | 5 | 5 | 5 | 5 | 5 | 5 | 5 | 4.8 | 5 |
| Pigment: C.I. Pigment Blue 15:3, phthalocyanine (147-14-8) | | | | | | | | | |
| Florstab UV-1 (Kromachem) | 2 | 2 | 2 | 2 | 2 | 2 | 2 | 1.9 | 2 |
| UV stabilizer | | | | | | | | | |
| **Viscosity [Pas]** | **32.5** | **26.4** | **18.3** | **24.6** | **27.2** | **31.2** | **33.6** | **24.5** | **10.7** |
| **Detergeability** | **N** | **N** | **N** | **N** | **N** | **Y** | **Y** | **Y** | **Y** |

**Table 1B**

| **Ingredients** | **C5** | **C6** | **C7** | **C8^{e}** | **C9^{f}** | **E5** |
|---|---|---|---|---|---|---|
| | Amount [wt-%] | | | | | |
| EBECRYL^{®} 1657 (Allnex) | 28 | | | | | 28 |
| Fatty acid polyester acrylate oligomer: stearic/palmitic acid polyester tetraacrylate | | | | | | |
| GENOMER* 4316 (RAHN) | | | 28 | | | |
| Urethane acrylate oligomer: aliphatic polyester urethane triacrylate oligomer | | | | | | |
| EBECRYL^{®} 3608 (Allnex) | | | | 28 | | |
| Epoxy acrylate oligomer: fatty acid modified epoxy acrylate oligomer diluted in 15% of propoxylated glycerol triacrylate | | | | | | |
| EBECRYL^{®} 1606 (Allnex) | | | | | 28 | |
| Epoxy acrylate oligomer: bisphenol-A epoxy diacrylate oligomer diluted in 20-25% trimethylolpropane triacrylate (CAS no: 55818-57-0 in 15625-89-5) | | | | | | |
| EBECRYL^{®} 438 (Allnex) | | 28 | | | | |
| Chlorinated polyester oligomer diluted with 40% of propoxylated glycerol triacrylate | | | | | | |
| EBECRYL^{®} 53 (Allnex) | 8 | 8 | 8 | 8 | 8 | 8 |
| Reactive diluent: propoxylated glycerol triacrylate (CAS no: 52408-84-1) | | | | | | |
| Zephrym^{™} 3300B (Croda) | - | 6 | 6 | 6 | 6 | 6 |
| alkylbenzene sulfonic acid surfactant: dodecyl benzenesulfonic acid salt of 2-amino-propane (CAS no: 84961-74-0, HLB : 11.4) | | | | | | |
| Omnirad 819 (IGM) | 8 | 8 | 8 | 8 | 8 | 8 |
| Photoinitiator: bis(2,4,6-trimethylbenzoyl)phenylphosphineoxide (CAS no: 162881-26-7) | | | | | | |
| Omyalite 50 (Omya) | 42 | 36 | 36 | 36 | 36 | 36 |
| Filler: calcium carbonate (CAS no: 1317-65-3) | | | | | | |
| Finntalc M15 (Mondo Mineralis) | 3 | 3 | 3 | 3 | 3 | 3 |
| Filler: talc (Mg-Silicate) (CAS no: 14807-96-6) | | | | | | |
| Carnauba wax T1 + T3 (A. Smit Trading AG) | 4 | 4 | 4 | 4 | 4 | 4 |
| Wax: Carnauba wax (CAS no: 8015-86-9) | | | | | | |
| Heliogen Blue D 7079 (BASF) | 5 | 5 | 5 | 5 | 5 | 5 |
| Pigment: C.I. Pigment Blue 15:3, phthalocyanine (147-14-8) | | | | | | |
| Florstab UV-1 (Kromachem) | 2 | 2 | 2 | 2 | 2 | 2 |
| UV stabilizer | | | | | | |
| **Viscosity [Pas]** | **27.2** | **35.8** | **55.0** | **35.5** | **27.6** | **38.4** |
| **Detergeability** | **N** | **N** | **N** | **N** | **N** | **Y** |

### Crumpling test of printed and cured intaglio inks

Even though the radiation curable intaglio inks according to the invention have been developed to be printed by an intaglio printing process wherein any excess of said ink is wiped off from the printing plate using a polymeric wiping cylinder and wherein said polymeric wiping cylinder is cleaned with an alkaline aqueous wiping solution in combination with one or more mechanical means such as brushes and/or pads, the crumpling test has been carried out on samples which have been printed by using an intaglio printing process wherein any excess of said ink is wiped off from the printing plate using a paper.

The radiation curable intaglio inks E1 and E5 were independently printed with an Ormag intaglio proof-press. The respective radiation curable intaglio ink was applied on the intaglio plate with a polymer hand-inking roller. The excess of the radiation curable intaglio inks was manually wiped off with a paper. The intaglio ink composition was printed on standard cotton paper substrate used for banknote applications (Cotton Banknote Paper from Louisenthal; 17 cm x 14.5 cm), the intaglio plate being heated at 60°C. The printed samples were cured by irradiation with a Ga-In and a Hg lamp (2 x 15 A; 2 x 150W/cm) from IST (two passes at 100 m/min).

A 6.5 cm x 6.5 cm square sample was taken from each substrate printed with the ink compositions (E1 and E5) described in Tables 1A-B.

Each square sample was individually rolled up with the printed layer facing the inside of the roll. The sample was introduced in the metal cylinder of a Crumpling Test Apparatus from IGT Reprotest and crumpled. The crumpled square sample was extracted from the cylinder. It was unfolded, rolled up along the next clockwise edge of the square sample and the crumpling procedure was repeated. The same procedure was applied sequentially along the other two edges of the square sample.

The rolling up and crumpling along each of the four edges of the square sample were repeated with the print layer facing the environment.

The square sample was unfolded, and the intaglio ink layer was assessed: the substrate comprising the layer made of the radiation cured intaglio ink E1 exhibited a rating of 5 and the substrate comprising the layer made of the radiation cured intaglio ink E5 exhibited a rating of 3-4, wherein "5" means "no change to the ink layer visible with a naked eye"; "4" means "minor change"; "3" means "major change < 50%", "2" means "major change > 50%" and "1" means "disappearance of the ink layer".

The UV-Vis curable intaglio inks according to the invention (E1 and E5) exhibited a good stability on the intaglio proof-press as they did not show any formation of skin for at least one night.

## Claims

1. A radiation curable intaglio ink comprising:
a. from about 10 wt-% to about 60 wt-% of one or more radiation curable compounds, wherein at least one of said one or more radiation curable compounds is a fatty acid polyester (meth)acrylate oligomer, preferably a fatty acid polyester acrylate oligomer;
b. from about 2 wt-% to about 20 wt-% of one or more photoinitiators, preferably selected from the group consisting of Norrish Type I photoinitiators, Norrish Type II photoinitiators and mixtures thereof;
c. from about 5 wt-% to about 12 wt-% of a high molecular weight acid modified alkyd surfactant and/or an alkylarene sulfonic acid surfactant;
d. from about 10 wt-% to about 55 wt-% of one or more fillers or extenders, preferably selected from the group consisting of carbon fibers, talcs, micas, wollastonites, calcinated clays, china clays, kaolins, carbonates, silicas and silicates, sulfates, titanates, titanium dioxides, alumina hydrates, silicas, fumed silicas, montmorillonites, graphites, anatases, rutiles, bentonites, vermiculites, zinc whites, zinc sulfides, wood flours, quartz flours, corn starches, natural fibers, synthetic fibers and combinations thereof, and
the weight percents being based on the total weight of the radiation curable intaglio ink,
wherein the radiation curable intaglio ink has a viscosity between about 10 and about 50 Pas at 40°C and 200 s⁻¹.

2. The radiation curable intaglio ink according to claim 1, wherein the high molecular weight acid modified alkyd surfactant has a molecular weight from about 3000 to about 20000, preferably from about 5000 to about 15000.

3. The radiation curable intaglio ink according to any of the preceding claims, wherein the fatty acid polyester (meth)acrylate is a fatty acid polyester tetraacrylate oligomer or a fatty acid polyester hexaacrylate oligomer.

4. The radiation curable intaglio ink according to any of the preceding claims, wherein the fatty acid polyester (meth)acrylate oligomer comprises saturated fatty acid residues, preferably saturated fatty acid residues having 14 to 20 carbons atoms, still more preferably 16 to 18 carbon atoms.

5. The radiation curable intaglio ink according to any of the preceding claims, wherein one or more another radiation curable compounds of the one or more radiation curable compounds are (meth)acrylate monomer reactive diluents selected from the group consisting of mono(meth)acrylate monomers, di(meth)acrylate monomers, tri(meth)acrylate monomers, tetra(meth)acrylate monomers and mixtures thereof.

6. The radiation curable intaglio ink according to any of the preceding claims, wherein one or more another radiation curable compounds of the one or more radiation curable compounds are selected from the group consisting of urethane (meth)acrylate oligomers, epoxy (meth)acrylate oligomers and mixtures thereof.

7. The radiation curable intaglio ink according to any of the preceding claims, wherein the alkylarene sulfonic acid surfactant is a (C1-C14-alkyl)-arene sulfonic acid, preferably an ammonium salt or alkyl substituted ammonium salt of (C4-C14-alkyl)-arene sulfonic acid, more preferably an ammonium salt or alkyl substituted ammonium salt of (C4-C14-alkyl)-benzene sulfonic acid.

8. The radiation curable intaglio ink to any of the preceding claims further comprising from about 1 wt- % to about 7 wt-% of one or more waxes, preferably selected from the group consisting of microcrystalline waxes, paraffin waxes, polyethylene waxes, fluorocarbon waxes, polytetrafluoroethylene waxes, Fischer-Tropsch waxes, silicone fluids, beeswaxes, candelilla waxes, montan waxes, carnauba waxes and mixtures thereof, the weight percents being based on the total weight of the radiation curable intaglio ink.

9. The radiation curable intaglio ink according to any of the preceding claims further comprising one or more coloring components selected from the group consisting of color constant pigments, dyes and mixtures thereof, preferably selected from the group consisting of color constant organic pigments, color constant inorganic pigments and mixtures thereof.

10. The radiation curable intaglio ink to any of the preceding claims further comprising one or more machine readable materials preferably selected from the group consisting of magnetic materials, luminescent materials, electrically conductive materials, infrared-absorbing materials and mixtures thereof.

11. A pattern or image made from the radiation curable intaglio ink recited in any one of claims 1 to 10.

12. A security document comprising the pattern or image recited in claim 11.

13. A process for producing a pattern or image, said process comprising
a) inking an intaglio engraved printing plate with the radiation curable intaglio ink recited in any one of claims 1 to 10,
b) wiping off any excess of the radiation curable intaglio ink using a polymeric wiping cylinder and cleaning said polymeric wiping cylinder with an alkaline aqueous wiping solution in combination with one or more mechanical means,
c) printing the pattern or image with the intaglio engraved printing plate by applying the radiation curable intaglio ink onto the substrate, and
d) curing the radiation curable intaglio ink by radiation.

14. The method according to claim 13, wherein the substrate is selected from the group consisting of papers or other fibrous materials, paper-containing materials, plastics and polymers, metalized plastics or polymers, composite materials and mixtures or combinations thereof.

15. The method according to claim 13 or 14, wherein the radiation curable intaglio ink is a UV-Vis curable intaglio ink and wherein the step d) of curing the UV-Vis curable intaglio ink is carried out with UV-Vis radiation.

## Patentansprüche

1. Strahlungshärtbare Tiefdruckfarbe, aufweisend:
a. von etwa 10 Gew.-% bis etwa 60 Gew.-% einer oder mehrerer strahlungshärtbarer Verbindungen, wobei mindestens eine der einen oder mehreren strahlungshärtbaren Verbindungen ein Fettsäurepolyester(meth)acrylatoligomer, vorzugsweise ein Fettsäurepolyesteracrylatoligomer ist;
b. etwa 2 Gew.-% bis etwa 20 Gew.-% eines oder mehrerer Photoinitiatoren, vorzugsweise ausgewählt aus der Gruppe bestehend aus Norrish Typ I Photoinitiatoren, Norrish Typ II Photoinitiatoren und Mischungen davon;
c. etwa 5 Gew.-% bis etwa 12 Gew.-% eines säuremodifizierten Alkydtensids mit hohem Molekulargewicht und/oder eines Alkylarensulfonsäure-Tensids;
d. von etwa 10 Gew.-% bis etwa 55 Gew.-% eines oder mehrerer Füllstoffe oder Streckmittel, vorzugsweise ausgewählt aus der Gruppe bestehend aus Kohlenstofffasern, Talken, Glimmer, Wollastoniten, kalzinierten Tonen, Porzellantonen, Kaolinen, Karbonaten, Kieselsäuren und Silikaten, Sulfaten, Titanaten, Titandioxiden, Aluminiumoxidhydraten, Kieselsäuren, pyrogenen Kieselsäuren, Montmorilloniten, Graphiten, Anatasen, Rutilen, Bentoniten, Vermiculiten, Zinkweiß, Zinksulfiden, Holzmehlen, Quarzmehlen, Maisstärken, natürlichen Fasern, synthetischen Fasern und Kombinationen davon und
wobei die Gewichtsprozente auf das Gesamtgewicht der strahlungshärtbaren Tiefdruckfarbe bezogen sind,
wobei die strahlungshärtbare Tiefdruckfarbe eine Viskosität zwischen etwa 10 und etwa 50 Pas bei 40°C und 200 s⁻¹ aufweist.

2. Strahlungshärtbare Tiefdruckfarbe nach Anspruch 1, wobei das säuremodifizierte Alkydtensid mit hohem Molekulargewicht ein Molekulargewicht von etwa 3000 bis etwa 20000, vorzugsweise von etwa 5000 bis etwa 15000 aufweist.

3. Strahlungshärtbare Tiefdruckfarbe nach einem der vorhergehenden Ansprüche, wobei das Fettsäurepolyester(meth)acrylat ein Fettsäurepolyestertetraacrylat-Oligomer oder ein Fettsäurepolyesterhexaacrylat-Oligomer ist.

4. Strahlungshärtbare Tiefdruckfarbe nach einem der vorhergehenden Ansprüche, wobei das Fettsäurepolyester(meth)acrylat-Oligomer gesättigte Fettsäurereste aufweist, vorzugsweise gesättigte Fettsäurereste mit 14 bis 20 Kohlenstoffatomen, noch bevorzugter 16 bis 18 Kohlenstoffatomen.

5. Strahlungshärtbare Tiefdruckfarbe nach einem der vorhergehenden Ansprüche, wobei es sich bei einer oder mehreren anderen strahlungshärtbaren Verbindungen der einen oder mehreren strahlungshärtbaren Verbindungen um (Meth)acrylatmonomer-Reaktivverdünner handelt, die aus der Gruppe ausgewählt sind, die aus Mono(meth)acrylatmonomeren, Di(meth)acrylatmonomeren, Tri(meth)acrylatmonomeren, Tetra(meth)acrylatmonomeren und Mischungen davon besteht.

6. Strahlungshärtbare Tiefdruckfarbe nach einem der vorhergehenden Ansprüche, wobei es sich bei der einen oder den mehreren strahlungshärtbaren Verbindungen um eine oder mehrere andere Verbindungen handelt, die ausgewählt sind aus der Gruppe bestehend aus Urethan(meth)acrylat-Oligomeren, Epoxy(meth)acrylat-Oligomeren und Mischungen davon.

7. Strahlungshärtbare Tiefdruckfarbe nach einem der vorhergehenden Ansprüche, wobei das Alkylarensulfonsäure-Tensid eine (C1-C14-Alkyl)-Arensulfonsäure ist, vorzugsweise ein Ammoniumsalz oder alkylsubstituiertes Ammoniumsalz der (C4-C14-Alkyl)-Arensulfonsäure, noch bevorzugter ein Ammoniumsalz oder alkylsubstituiertes Ammoniumsalz der (C4-C14-Alkyl)-Benzolsulfonsäure.

8. Strahlungshärtbare Tiefdruckfarbe nach einem der vorhergehenden Ansprüche, die ferner etwa 1 Gew.-% bis etwa 7 Gew.-% eines oder mehrerer Wachse aufweist, die vorzugsweise aus der Gruppe ausgewählt sind, die aus mikrokristallinen Wachsen, Paraffinwachsen, Polyethylenwachsen, Fluorkohlenstoffwachsen, Polytetrafluorethylenwachsen, Fischer-Tropsch-Wachsen, Silikonflüssigkeiten, Bienenwachsen, Candelillawachsen, Montanwachsen, Carnaubawachsen und Mischungen davon besteht, wobei sich die Gewichtsprozente auf das Gesamtgewicht der strahlungshärtbaren Tiefdruckfarbe beziehen.

9. Strahlungshärtbare Tiefdruckfarbe nach einem der vorhergehenden Ansprüche, die ferner eine oder mehrere farbgebende Komponenten aufweist, die aus der Gruppe ausgewählt sind, die aus farbkonstanten Pigmenten, Farbstoffen und Mischungen davon besteht, vorzugsweise ausgewählt aus der Gruppe, die aus farbkonstanten organischen Pigmenten, farbkonstanten anorganischen Pigmenten und Mischungen davon besteht.

10. Strahlungshärtbare Tiefdruckfarbe nach einem der vorhergehenden Ansprüche, die ferner ein oder mehrere maschinenlesbare Materialien aufweist, die vorzugsweise aus der Gruppe ausgewählt sind, die aus magnetischen Materialien, lumineszierenden Materialien, elektrisch leitfähigen Materialien, infrarotabsorbierenden Materialien und Mischungen davon besteht.

11. Muster oder Bild, das aus der strahlungshärtbaren Tiefdruckfarbe nach einem der Ansprüche 1 bis 10 hergestellt ist.

12. Sicherheitsdokument, das das in Anspruch 11 genannte Muster oder Bild aufweist.

13. Verfahren zur Herstellung eines Musters oder Bildes, wobei das Verfahren aufweist:
a) Einfärben einer Stichtiefdruckplatte mit der strahlungshärtbaren Tiefdruckfarbe nach einem der Ansprüche 1 bis 10,
b) Abwischen eines Überschusses der strahlungshärtbaren Tiefdruckfarbe unter Verwendung eines polymeren Wischzylinders und Reinigen des polymeren Wischzylinders mit einer alkalischen wässrigen Wischlösung in Kombination mit einem oder mehreren mechanischen Mitteln,
c) Drucken des Musters oder Bildes mit der Stichtiefdruckplatte durch Auftragen der strahlungshärtbaren Tiefdruckfarbe auf das Substrat, und
d) Härtung der strahlungshärtbaren Tiefdruckfarbe durch Strahlung.

14. Verfahren nach Anspruch 13, wobei das Substrat aus der Gruppe ausgewählt ist, die aus Papieren oder anderen faserigen Materialien, papierhaltigen Materialien, Kunststoffen und Polymeren, metallisierten Kunststoffen oder Polymeren, Verbundwerkstoffen und Mischungen oder Kombinationen davon besteht.

15. Verfahren nach Anspruch 13 oder 14, wobei die strahlungshärtbare Tiefdruckfarbe eine UV-Vishärtbare Tiefdruckfarbe ist und wobei der Schritt d) der Härtung der UV-Vis-härtbaren Tiefdruckfarbe mit UV-Vis-Strahlung durchgeführt wird.

## Revendications

1. Encre pour impression en creux durcissable par rayonnement comprenant :
a. d'environ 10 % en poids à environ 60 % en poids d'un ou plusieurs composés durcissables par rayonnement, dans laquelle au moins l'un desdits un ou plusieurs composés durcissables par rayonnement est un oligomère de (méth)acrylate de polyester d'acide gras, de préférence un oligomère d'acrylate de polyester d'acide gras ;
b. d'environ 2 % en poids à environ 20 % en poids d'un ou plusieurs photoinitiateurs, de préférence choisis dans le groupe constitué de photoinitiateurs Norrish Type I, de photoinitiateurs Norrish Type II et de mélanges de ceux-ci ;
c. d'environ 5 % en poids à environ 12 % en poids d'un tensioactif d'alkyd modifié par un acide de poids moléculaire élevé et/ou d'un tensioactif d'acide alkylarène sulfonique ;
d. d'environ 10% en poids à environ 55 % en poids d'un(e) ou plusieurs charges ou extendeurs, de préférence choisi(e)s dans le groupe constitué des fibres de carbone, des talcs, des micas, des wollastonites, des argiles calcinées, des terres à porcelaine, des kaolins, des carbonates, des silices et des silicates, des sulfates, des titanates, des dioxydes de titane, des hydrates d'alumine, des silices, des silices sublimées, des montmorillonites, des graphites, des anatases, des rutiles, des bentonites, des vermiculites, des blancs de zinc, des sulfures de zinc, des farines de bois, des farines de quartz, des amidons de maïs, des fibres naturelles, des fibres synthétiques et des combinaisons de ceux-ci, et
les pourcentages en poids étant basés sur le poids total de l'encre pour impression en creux durcissable par rayonnement,
dans laquelle l'encre pour impression en creux durcissable par rayonnement a une viscosité entre environ 10 et environ 50 Pas à 40 °C et 200 s⁻¹.

2. Encre pour impression en creux durcissable par rayonnement selon la revendication 1, dans laquelle le tensioactif d'alkyd modifié par un acide de poids moléculaire élevé a un poids moléculaire d'environ 3 000 à environ 20 000, de préférence d'environ 5 000 à environ 15 000.

3. Encre pour impression en creux durcissable par rayonnement selon l'une quelconque des revendications précédentes, dans laquelle le (méth)acrylate de polyester d'acide gras est un oligomère de tétraacrylate de polyester d'acide gras ou un oligomère d'hexaacrylate de polyester d'acide gras.

4. Encre pour impression en creux durcissable par rayonnement selon l'une quelconque des revendications précédentes, dans laquelle l'oligomère de (méth)acrylate de polyester d'acide gras comprend des résidus d'acides gras saturés, de préférence des résidus d'acides gras saturés comportant de 14 à 20 atomes de carbone, de manière encore davantage préférée de 16 à 18 atomes de carbone.

5. Encre pour impression en creux durcissable par rayonnement selon l'une quelconque des revendications précédentes, dans laquelle un ou plusieurs autres composés durcissables par rayonnement des un ou plusieurs composés durcissables par rayonnement sont des diluants réactifs de monomères de (méth)acrylate choisis dans le groupe constitué des monomères de mono(méth)acrylate, des monomères de di(méth)acrylate, des monomères de tri(méth)acrylate, des monomères de tétra(méth)acrylate et des mélanges de ceux-ci.

6. Encre pour impression en creux durcissable par rayonnement selon l'une quelconque des revendications précédentes, dans laquelle un ou plusieurs autres composés durcissables par rayonnement des un ou plusieurs composés durcissables par rayonnement sont choisis dans le groupe constitué des oligomères de (méth)acrylate d'uréthane, des oligomères de (méth)acrylate d'époxy et des mélanges de ceux-ci.

7. Encre pour impression en creux durcissable par rayonnement selon l'une quelconque des revendications précédentes, dans laquelle le tensioactif d'acide alkylarène sulfonique est un acide (C1-C14-alkyl)-arène sulfonique, de préférence un sel d'ammonium ou un sel d'ammonium à substitution alkyle d'acide (C4-C14-alkyl)-arène sulfonique, de manière davantage préférée un sel d'ammonium ou un sel d'ammonium à substitution alkyle d'acide (C4-C14-alkyl)-benzène sulfonique.

8. Encre pour impression en creux durcissable par rayonnement selon l'une quelconque des revendications précédentes comprenant en outre d'environ 1 % en poids à environ 7 % en poids d'une ou plusieurs cires, de préférence choisies dans le groupe constitué des cires microcristallines, des paraffines, des cires de polyéthylène, des cires fluorocarbonées, des cires de polytétrafluoroéthylène, des cires de Fischer-Tropsch, des fluides de silicone, des cires d'abeille, des cires de candelilla, des cires de montan, des cires de carnauba et des mélanges de celles-ci, les pourcentages en poids étant basés sur le poids total de l'encre pour impression en creux durcissable par rayonnement.

9. Encre pour impression en creux durcissable par rayonnement selon l'une quelconque des revendications précédentes comprenant en outre un ou plusieurs composants colorants choisis dans le groupe constitué des pigments à constance des couleurs, des colorants et des mélanges de ceux-ci, de préférence choisis dans le groupe constitué des pigments organiques à constance des couleurs, des pigments inorganiques à constance des couleurs et des mélanges de ceux-ci.

10. Encre pour impression en creux durcissable par rayonnement selon l'une quelconque des revendications précédentes comprenant en outre un ou plusieurs matériaux lisibles par une machine de préférence choisis dans le groupe constitué des matériaux magnétiques, des matériaux luminescents, des matériaux électroconducteurs, des matériaux absorbant les infrarouges et des mélanges de ceux-ci.

11. Motif ou image obtenu(e) à partir de l'encre pour impression en creux durcissable par rayonnement selon l'une quelconque des revendications 1 à 10.

12. Document de sécurité comprenant le motif ou l'image selon la revendication 11.

13. Procédé de production d'un motif ou d'une image, ledit procédé comprenant
a) l'encrage d'une plaque d'impression en creux gravée avec l'encre pour impression en creux durcissable par rayonnement citée dans l'une quelconque des revendications 1 à 10,
b) l'essuyage de tout excès de l'encre pour impression en creux durcissable par rayonnement en utilisant un cylindre d'essuyage polymère et en nettoyant ledit cylindre d'essuyage polymère avec une solution aqueuse alcaline d'essuyage en combinaison avec un ou plusieurs moyens mécaniques,
c) l'impression du motif ou de l'image avec la plaque d'impression en creux gravée par application de l'encre pour impression en creux durcissable par rayonnement sur le substrat, et
d) le durcissement de l'encre pour impression en creux durcissable par rayonnement par un rayonnement.

14. Procédé selon la revendication 13, dans lequel le substrat est choisi dans le groupe constitué de papiers ou autres matériaux fibreux, matériaux contenant du papier, plastiques et polymères, plastiques ou polymères métallisés, matériaux composites et mélanges ou combinaisons de ceux-ci.

15. Procédé selon la revendication 13 ou 14, dans lequel l'encre pour impression en creux durcissable par rayonnement est une encre pour impression en creux durcissable par UV-Vis et dans lequel l'étape d) de durcissement de l'encre pour impression en creux durcissable par UV-Vis est réalisée avec un rayonnement UV-Vis.
